# FASCICULE DE BREVET EUROPEEN

(11) **EP 1 325 526 B1**
(45) Date de publication et mention de la délivrance du brevet: **31.10.2018**
(21) Numéro de dépôt: 01973907.7
(22) Date de dépôt: 21.09.2001
(51) Int. Cl.: H01M 4/58, C01B 33/20, C01B 25/37, H01M 4/48, H01M 4/62, C01B 17/96, C01B 25/45, H01G 9/00, H01M 4/136, H01M 4/36, H01M 4/485, H01M 4/525, H01M 10/052, H01M 10/0525, H01L 31/0224

(54) **PROCEDE DE SYNTHESE DE MATERIAU CARBONE A BASE DE LixM1-yM'y(XO4)n**
SYNTHESEVERFAHREN VON KOHLENSTOFFMATERIAL AUF BASIS VON LixM1-yM'y(XO4)n
SYNTHESIS METHOD FOR CARBON MATERIAL BASED ON LixM1-yM'y(XO4)n

(30) Priorité: 26.09.2000 CA 2320661
(43) Date de publication de la demande: 09.07.2003
(60) Demande divisionnaire: 11167699.5
(73) Titulaire: Hydro-Québec, Montréal, Québec H2Z 1A4 (CA); UNIVERSITE DE MONTREAL, Montreal, Quebec H3T 1J4 (CA); CNRS, 75016 Paris Cedex 16 (FR)
(72) Inventeur: ARMAND, Michel, Montréal, Québec H3T 1N2 (CA); GAUTHIER, Michel, La Prairie, Québec J5R 1V0 (CA); MAGNAN, Jean-François, Neuville, Québec G0R 2R0 (CA); RAVET, Nathalie, Montréal, Québec H3T 1T9 (CA)
(74) Mandataire: Berger, Axel Bernhard
(86) Numéro de dépôt international: PCT/CA2001/001350
(87) Numéro de publication internationale: WO 2002/027824

(56) Documents cités:
- EP-A- 0 630 064
- EP-A- 1 049 182
- EP-A- 1 094 532
- EP-A- 1 094 533
- WO-A-01/53198
- US-A- 5 910 382
- US-A- 5 958 624

## Description

### DOMAINE DE L'INVENTION

La présente invention concerne une méthode de préparation de matériaux d'électrode capables de permettre des réactions rédox par échange d'ions alcalins et d'électrons. Les applications sont dans le domaine des générateurs électrochimiques (batteries) primaires ou secondaires, des générateurs supercapacités et dans le domaine des systèmes de modulation de la lumière de type électrochrome.

### ART ANTÉRIEUR

Les composés d'insertion de formule LiMPO₄ de structure olivine où M est un cation métallique appartenant à la première ligne des métaux de transition par exemple Mn, Fe, Co ou Ni, sont connus et leur utilisation comme matériau de cathode dans les batteries au lithium a été rapporté par Goodenough et al. dans le brevet US-A-5.910.382. Dans la demande canadienne de brevet portant le numéro CA-A-2.307.119, la généralité des composés "de type LiMPO₄" a été précisée dans la mesure où tout en gardant sensiblement la même structure olivine, une partie des atomes M peut être substituée par d'autres métaux de valence comprise entre 2 et 3, dont les éléments de transition voisins ou une partie du phosphore, peut être substitué par des éléments tels que Si, S, Al, As. De même, le lithium permettant l'électroneutralité peut occuper une fraction ou la totalité des sites octaédriques de la structure olivine, ou éventuellement se placer en position interstitielle lorsque la totalité des sites octaédriques est occupée.

La formule Li_{x+y}M_{1-(y+d+t+q+r)}D_{d}TₜQ_{q}Rᵣ[PO₄]₁₋₍ₚ₊ₛ₊ᵥ₎[SO₄]ₚ[SiO₄]ₛ[VO₄] dans laquelle :
- M peut être Fe²⁺ ou Mn²⁺ ou un mélange des deux;
- D peut être un métal dans l'état d'oxydation +2 choisi dans le groupe contenant Mg²⁺, Ni²⁺, Co²⁺, Zn2+, Cu²⁺, et Ti²⁺;
- T peut est un métal dans l'état d'oxydation +3 choisi dans le groupe contenant Al³⁺, Ti³⁺, Cr³⁺, Fe³⁺, Mn³⁺, Ga³⁺ et V³⁺;
- Q est un métal dans le degré d'oxydation +4 choisi dans le groupe contenant Ti⁴⁺, Ge⁴⁺, Sn⁴⁺ et V⁴⁺; et
- R est un métal dans l'état d'oxydation +5 choisi dans le groupe contenant V⁵⁺, Nb⁵⁺ et Ta⁵⁺,
avec une définition des valeurs prises par les paramètres x, y, d, t, q, r, p, s et v englobe la généralité du sens à donner au terme "de type LiₓMXO₄, 0 ≤ x ≤ 2 " de structure olivine au sens de la présente invention et sera utilisée dans ce qui suit. Les substituants préférés du phosphore sont le silicium et le soufre.

Dans ces composés préparés sous forme lithiés (à l'état déchargé), au moins un des métaux de transition est à l'état d'oxydation II. Dans le brevet US-A-5.910.382 et sa CIP) ainsi que dans les brevets et publications suivants, les synthèses des composés LiMPO₄ sont toutes réalisées à partir d'un sel du métal de transition M correspondant au degré d'oxydation II et en conservant cet état d'oxydation tout au long de la synthèse jusqu'au produit final. L'élément de transition dont on maintient la valence II tout au cours de la synthèse, quelle que soit la voie suivie, est le fer dont la plupart des composés s'oxydent spontanément. À l'air par exemple, LiFePO₄ a été réalisée par réaction à l'état solide, à haute température et sous atmosphère inerte des divers constituants (par exemple pour la source de fer, Fe(OOCCH₃)₂, la source de phosphate, NH₄H₂PO₄ et celle de lithium, Li₂CO₃). Dans tous les cas, la source de fer est un sel dans lequel le fer est à l'état d'oxydation II, que ce soit à partir d'acétate de fer II comme décrit dans le brevet US-A-5.910.382, d'oxalate de fer II comme décrit dans Electrochem and Solid-State Letters, 3, 66 (2000) et dans Proc. 10th IMLB, Como, Italy, May (2000) ou de vivianite (Fe₃(PO₄)₂8H₂O) comme décrit dans la demande canadienne de brevet CA-A-2.270.771, la sensibilité du fer II vis-à-vis de l'oxydation par l'oxygène rend tous ces processus de synthèse très délicats et toutes les précautions doivent être prises pour supprimer totalement la présence d'oxygène et notamment lors du traitement thermique, ce qui augmente le coût du matériau correspondant. Cette sensibilité donne lieu a une irreproductibilité du comportement électrochimique des échantillons. Ce problème est souligné dans Yamada et al. J. electrochem Soc., 148, A224 (2001). Par ailleurs, le fer est l'élément le plus utile, de par son abondance et absence de toxicité, et la principale mise en oeuvre de l'invention est destinée à une préparation améliorée de composés rédox contenant cet élément. Il est évident que les résultats de l'invention s'appliquent au manganèse, au vanadium, au cobalt, au titane, au vanadium etc. dans des conditions correspondantes à leur degré d'oxydation voulu. D'une manière générale, le précurseur du métal M moins coûteux ou plus facile à manipuler ne correspond pas au degré d'oxydationa celui requis dans la formule du matériau rédox.

Une amélioration de ces composés a précédemment été proposée dans le brevet CA-A-2.270.771). Dans ce document, il a été montré que les performances électrochimiques de LiFePO₄ étaient grandement améliorées que ce soit en terme de capacité réversible, de cyclabilité ou de puissance, lorsque les particules du matériau sont recouvertes d'une fine couche de carbone conducteur électronique. Dans cette demande, les inventeurs ont mis à profit le fait d'utiliser un sel de fer à l'état d'oxydation II, en présence d'un composé organique susceptible d'être pyrolysé, dans les conditions de la synthèse, sans toutefois que le résidu de carbone ne puisse être oxydé à cause du faible pouvoir oxydant du composé ferreux ou de l'atmosphère en équilibre avec ce dernier.

La demande de brevet EP-A-1.094.532 décrit une méthode pour la production de matériaux pour une électrode positive active. Cette méthode inclut une étape de mélange d'une pluralité de substances pour obtenir un précurseur. Puis le précurseur est fritté pour aboutir à la synthèse d'un composé de formule Liₓ M_{y}PO₄ dans lequel x est supérieur à 0 et inférieur ou égal à 2, y est supérieur ou égal à 0,8 et inférieur ou égal à 1,2 et M inclus au moins un métal ayant des orbitales 3d. Un agent réducteur solide est ajouté au cours de l'étape de mélange audit précurseur afin de permettre la préparation, qui s'effectue sous atmosphère inerte, de matériau pour électrodes positives actives capables de doper et de dédoper de façon satisfaisante et réversible le lithium.

EP-A-1.094.533 décrit un électrolyte non-aqueux adapté pour les batteries secondaires utilisant un matériau ou une électrode active contenant un composé représenté par la formule générale LiₓM_{y}PO₄, dans laquelle x est supérieur à 0 et inférieur ou égal à 2, et y est supérieur ou égal à 0,8 et inférieur ou égal à 1,2, avec M contenant un état de transition 3d, la taille des grains de LiₓM_{y}PO₄ n'est pas supérieure à 10 micromètres. Cet électrolyte non aqueux pour batteries secondaires est présenté comme possédant des caractéristiques cycliques améliorées et une haute de capacité.

EP 0 630 064 A1 décrit des cathodes à base d'oxyde de formule LiₓA_{y}M_{z}JₘOₚ.

US 5,958,624 A décrit des électrodes composites constituées d'oxydes métalliques mesostructuraux de formule LiₙQₓM_{y}O_{z} comprenant un liant organique et un additif de conduction. US5910382 décrit des matériaux cathodiques pour batteries secondaires au lithium.

La demande internationale PCT référencée WO 01/53198 décrit un matériau, à base de composé mixte lithium métal, qui libère par interaction électrochimique des ions lithium. Ce matériau est préparé à partir des précurseurs nécessaires par réduction d'au moins un des ions métalliques par du carbone

Outre leur performance électrochimique dans les accumulateurs au lithium, l'intérêt de cette nouvelle famille de matériaux est de mettre en jeu des éléments non-toxiques, abondants et peu coûteux à extraire. Ces caractéristiques sont déterminantes pour le développement de gros accumulateurs au lithium applicables notamment au marché du véhicule électrique dont le besoin devient pressant avec l'accumulation dans l'environnement des gaz à effet de serre.

Il existe donc un besoin pour la mise au point d'un nouveau procédé plus simple et plus reproductible, moins onéreux que ceux déjà connus tout en offrant des performances améliorées.

### RÉSUMÉ DE L'INVENTION

La présente invention décrit un procédé de synthèse de composés de formule LiₓM_{1-y}M'_{y}(XO₄)ₙ, par mise en équilibre dans les proportions requises d'un mélange comprenant des précurseurs des constituants du composé et la réduction du mélange équilibré des précurseurs avec une atmosphère gazeuse réductrice. Le mélange initial peut être additionné d'une source de carbone ce qui permet la préparation des composés de formule LiₓM_{1-y}M'_{y}(XO₄)ₙ sous la forme d'un matériau constitué de grains enrobés de carbone. Le matériau ainsi obtenu possède une excellente conductivité.

Ces matériaux sont utilisables pour la préparation notamment de cellules électrochimiques comprenant un électrolyte et au moins deux électrodes dont au moins une comprend au moins un matériau synthétisé selon un des procédés de l'invention.

### BRÈVE DESCRIPTION DES DESSINS

### Légendes des figures citées dans les exemples

- **Figure 1** :: 1^{er} cycle obtenus par voltammétrie lente (v = 20 mV.h⁻¹) à 80°C pour une batterie contenant LiFePO₄ non carboné synthétisé à partir de FePO₄.2H₂O (réduction par l'hydrogène) (traits pleins) comparé au même échantillon après carbonisation (traits pointillés)
- **Figure 2 :**: Morphologie de LiFePO₄ carboné synthétisé à partir de FePO₄.2H₂O (réduction par l'hydrogène). Micrographie prise au microscope électronique à balayage grossissement × 5.000
- **Figure 3 :**: 5^{ème} cycle obtenu par voltammétrie lente (v = 20 mV.h⁻¹) à 80°C d'une batterie contenant LiFePO₄ carboné synthétisé à partir de FePO₄.2H₂O (réduction par l'hydrogène) (traits pleins) comparé un LiFePO₄ obtenu par synthèse classique suivi d'un étape de dépôt de carbone(traits pointillés).
- **Figure 4 :**: Profils de charge et de décharge réalisés en mode galvanostatique à 80°C et à deux vitesses de charge et décharge (C/8 : traits pleins et C/2 traits pointillés) pour des batteries contenant LiFePO₄ carboné synthétisé à partir de FePO₄.2H₂O (réduction par l'hydrogène)
- **Figure 5** :: résultats de cyclages réalisés en mode galvanostatique à 80°C et à deux vitesses de charge et décharge pour des batteries contenant LiFePO₄ carboné synthétisé à partir de FePO₄.2H₂O (réduction par l'hydrogène).
- **Figure 6 :**: 5^{ème} cycle obtenu par voltammétrie lente (v = 20 mV.h⁻¹) à 80°C de batteries contenant LiFePO₄ carboné synthétisé à partir de FePO₄.2H₂O (réduction par CO/CO₂). 1/1) pour des échantillons contenants différents pourcentages de carbone (0.62% : traits pleins, 1.13 % traits pointillés, 1.35% traits gras).
- **Figure 7 :**: 1^{er} cycle (traits pointillés) et 10^{ème} cycle (traits pleins) obtenu par voltammétrie lente (v = 20 mV.h⁻¹) à 80°C d'une batterie contenant LiFePO₄ synthétisé à partir de FePO₄.2H₂O (réduction par le carbone).
- **Figure 8 :**: Evolution de la capacité au cours du cyclage, d'une batterie contenant LiFePO₄ synthétisé à partir de FePO₄.2H₂O (réduction par le carbone). Résultats obtenus par voltammétrie lente (v=20 mV.h⁻¹) à 80°C.
- **Figure 9 :**: 1^{er} cycle (traits pointillés) et 10^{ème} cycle (traits pleins) obtenu par voltammétrie lente (v =20 mV.h⁻¹) à 80°C d'une batterie contenant LiFePO₄ synthétisé à partir de FePO₄.2H₂O (réduction par l'acétate de cellulose)

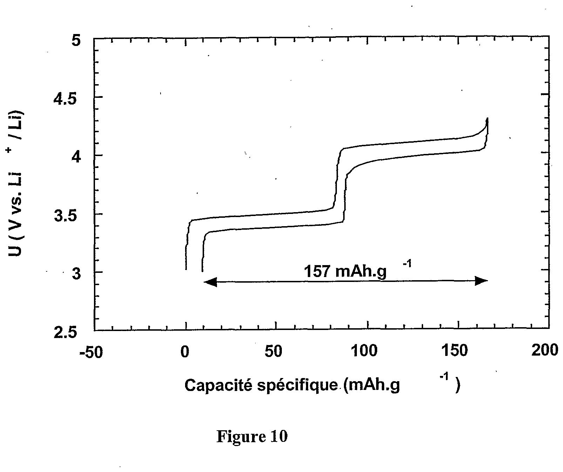

- **Figure 10 :**: Profils de charge et de décharge réalisés en mode galvanostatique à température ambiante a une vitesses de charge et décharge de C/24 pour des batteries contenant LiFe_{0.5}Mn_{0.5}PO₄ carboné.

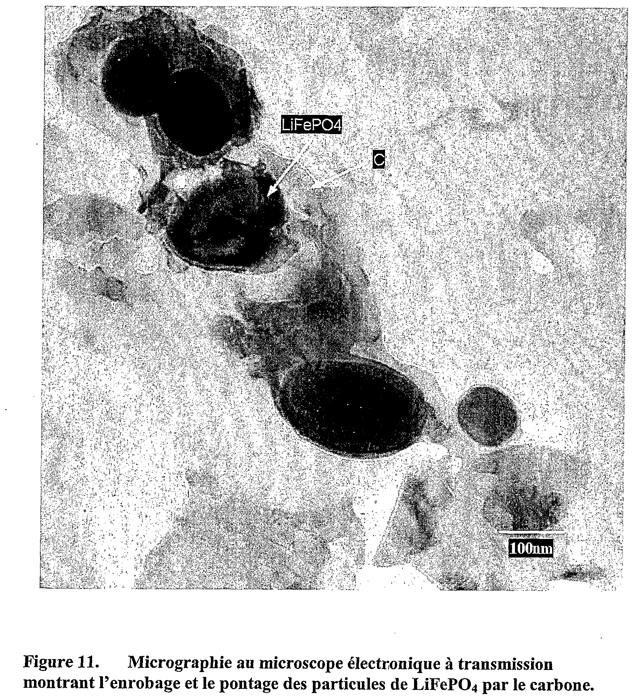

- **Figure 11** :: Micrographie au microscope électronique à transmission montrant l'enrobage et le pontage des particules de LiFePO₄ par le carbone.

### DESCRIPTION DE L'INVENTION

**Un premier objet** de la présente invention est constitué par la synthèse de composés de formule LiₓM_{1-y}M'_{y}(XO₄)ₙ, dans laquelle x, y et n sont des nombres tels que 0 ≤ x ≤ 2, 0 ≤ y ≤ 0,6 et 1≤n≤1,5, M est un métal de transition ou un mélange de métaux de transition de la première ligne du tableau périodique, M' est un élément de valence fixe choisi parmi Mg²⁺, Ca²⁺, Al³⁺, Zn²⁺ ou une combinaison de ces mêmes éléments et X est choisi parmi S, P et Si,
par mise en équilibre dans les proportions requises d'un mélange comprenant au moins:
- a) une source de M, une partie au moins du ou desdits métaux de transition qui composent M se trouvant dans un état d'oxydation supérieur à celui du métal dans le composé final LiₓM_{1-y}M'_{y}(XO₄)ₙ;
- b) une source d'un élément M';
- c) un composé source de lithium; et
- d) un composé source de X,
les sources des éléments M, M', Li et X pouvant être introduites, en tout ou en partie, sous forme de composés comportant plus d'un élément source, et
la synthèse se faisant par réaction et mise en équilibre du mélange
intime et/ou homogéne dans les proportions requises des précurseurs a) à d), et par réduction de manière à amener le ou les métaux de transition au degré de valence voulu.

La réduction peut être réalisée de différentes façons, par les techniques utilisées dans l'élaboration de céramiques et par différents agents réducteurs, basés sur la chimie des dérivés du carbone, dont CO, des hydrocarbures et divers composés organiques, de l'hydrogène et de l'ammoniac.

Selon un mode préférentiel de réalisation de la présente invention, la réduction du mélange des précurseurs a) à d) est réalisée avec une atmosphère gazeuse réductrice.

La source de M peut également être une source de X et/ou la source de M' peut également être source de X et/ou la source de lithium peut être également source de X et/ou la source de X peut également être source de lithium.

Selon un mode préférentiel de réalisation de l'invention la mise en équilibre du mélange de précurseurs a) à d) est faite sous forme de mélange intime et/ou homogène. Par mélange intime, ont entend préférentiellement, dans le cadre de la présente invention, un mélange ne contenant pas d'agrégats de particules de composants individuels du mélange, et des tailles de particules de préférence inférieures à 10 microns, de préférence inférieure à 5 microns. Les méthodes permettant cette réalisation sont connues de l'homme de l'art, tels le cobroyage en présence de billes de matériau dur (tel l'acier, le carbure de tungstène, l'alumine, la zircone), à sec ou en présence d'un liquide, soit avec les appareilss de type cyclone où les particules sont affinées par frottement sur les parois de l'appareil ou sur elle-même, l'energie ultrasonore, soit encore l'atomisation (spray drying) de solutions ou de supensions.

Par mélange homogène ont entend un mélange dans lequel aucune variation locale de concentration d'un des composants du mélange n'est apparente d'où soit extraite la fraction du mélange choisi pour l'échantillonnage . L'agitation mécanique par le biais de palettes ou de barreaux magnétiques pour les suspension, les mélangeurs planétaires, à mouvement cycloïdal sont des exemples de mode de mise en oeuvre ; par définition les solutions répondent à ce critère,

Dans le cadre de la présente invention, le ou les métaux de transition est (sont) avantageusement choisi(s) au moins en partie dans le groupe constitué par le fer, le manganèse, le cobalt et le nickel, le complément des métaux de transition étant préférentiellement choisi dans le groupe constitué par le vanadium, le titane, le chrome et le cuivre.

De façon avantageuse, le composé source de M est dans un état d'oxydation peut varier de 3 à 7.

Selon un mode préférentiel de réalisation de l'invention, le composé source de M est l'oxyde de fer III ou la magnétite, le dioxide de manganèse, le pentoxyde de di-vanadium, le phosphate de fer trivalent, le nitrate de fer trivalent, le sulfate de fer trivalent, l'hydroxyphosphate de fer et de lithium ou le sulfate ou le nitrate de fer trivalent, ou un mélange de ces derniers.

Selon un autre mode préférentiel de réalisation du procédé, le composé source de lithium est choisi dans le groupe constitué par l'oxyde ou l'hydroxyde de lithium, le carbonate de lithium, le phosphate neutre Li₃PO₄, le phosphate acide LiH₂PO_{4,} l'ortho, le méta ou les poly silicates de lithium, le sulfate de lithium, l'oxalate de lithium et l'acétate de lithium., ou un mélange de ces derniers, plus préférentiellement encore, le composé source de lithium est le carbonate de lithium de formule Li₂CO₃.

Selon un autre mode avantageux, la source de X est choisie dans le groupe constitué par l'acide sulfurique, le sulfate de lithium, l'acide phosphorique et ses esters, le phosphate neutre Li₃PO₄ ou le phosphate acide LiH₂PO₄, les phosphates mono- ou di-ammoniques, le phosphate de fer trivalent, le phosphate de manganèse et d'ammonium(NH₄MnPO₄), la silice, les silicates de lithium, les alcoxysilanes et leurs produits d'hydrolyse partielle et les mélanges de ces derniers. Plus avantageusement encore, le composé précurseur de X est le phosphate de fer, de préférence le phosphate de fer (III), anhydre ou hydraté.

Le procédé de l'invention est particulièrement performant pour la préparation d'un ou de plusieurs des composés suivants, dans lequel au moins un des dérivés du lithium obtenu est de formule LiFePO₄, LiFe₁₋ₛMnₛPO₄ avec 0 ≤ s ≤ 0,9, LiFc_{1-y}Mg_{y}PO₄ et LiFe_{1-y}Ca_{y}PO₄ avec 0 ≤ y ≤ 0,3, LiFe₁₋ₛMnₛMg_{y}PO₄ avec 0 ≤ s ≤ 1 et 0 ≤ y ≤ 0,2, Li₁₊ₓFeP₁₋ₓSiₓO₄ avec 0 ≤ x ≤ 0,9, Li₁₊ₓFe₁₋ₛMnₛP₁₋ₓSiₓO avec 0 ≤ s ≤ 1, Li_{1+z}Fe_{1-s-z}MnₛP_{1-z}S_{z}O₄ avec 0 ≤ s ≤ 1, 0 ≤ z ≤ 0,2, Li_{1+2q}Fe_{1-s-q}MnₛPO₄ avec 0 ≤ s ≤ 1, et 0 ≤ q ≤ 0,3, Li₁₊ᵣFe₁₋ₛMnₛ(S₁₋ᵣPᵣO₄)_{1,5} avec 0 ≤ r ≤ 1, 0 ≤ s,t ≤ 1 ou Li_{0,5+u}Fe₁₋ₜTiₜ(PO₄)_{1,5} avec 0 ≤ t ≤ 1, 0 ≤ u ≤ 2,5. Le procédé selon l'invention donne des résultats améliorés lorsqu'on obtient des composés de formule LiₓM_{1-y}M'_{y}(XO₄)ₙ ayant une structure olivine ou Nasicon, incluant la forme monoclinique.

La réduction est obtenue par l'action d'une atmosphère réductrice choisie de façon à réduire l'état d'oxydation de l'ion métallique M au niveau requis pour la constitution du composé sans toutefois le réduire à l'état métallique neutre. Cette atmosphère réductrice contient préférentiellement de l'hydrogène ou un gaz capable de générer de l'hydrogène dans les conditions de la synthèse, de l'ammoniac ou une substance capable de générer de l'ammoniac dans les conditions de la synthèse ou du monoxyde de carbone, ces gaz étant utilisés purs ou en mélanges et pouvant également être utilisés en présence de vapeur d'eau et/ou en présence de dioxyde de carbone et/ou en présence d'un gaz neutre (tel que l'azote ou l'argon).

Selon un mode avantageux de réalisation, l'atmosphère réductrice est constituée par un mélange CO/CO₂ ou H₂/H₂O, NH₃/H₂0 ou leur mélange, générant une pression d'équilibre d'oxygène inférieure ou égale à celle déterminée par le métal de transition au degré d'oxydation correspondant aux précurseurs induits pour former le composé LiₓM_{1-y}M'_{y}(XO₄)ₙ, mais supérieure à celle correspondant à la réduction d'un quelconque des éléments de transition présents à l'état métallique, assurant la stabilité thermodynamique de LiₓM_{1-y}M'_{y}(XO₄)ₙ dans le mélange réactionnel, indépendamment du temps de réaction de la synthèse.

Selon un autre mode avantageux de réalisation de l'invention l'atmosphère réductrice est constituée par un mélange CO/CO₂, H₂/H₂O, NH₃/H₂O ou leur mélange, générant une pression d'équilibre d'oxygène inférieure ou égale à celle déterminée par un des métaux de transition présents dans LiₓM_{1-y}M'_{y}(XO₄)ₙ, pouvant éventuellement conduire à la réduction d'au moins cet élément de transition à l'état métallique, l'obtention du composé LiₓM_{1-y}M'_{y}(XO₄)ₙ étant réalisée par le contrôle de la température et du temps de contact avec la phase gazeuse ; la température de synthèse étant préférentiellement comprise entre 200 et 1.200 °C, plus préférentiellement encore entre 500 et 800 ° C, et le temps de contact du mélange réactionnel avec la phase gazeuse étant préférentiellement compris entre 2 minutes et 5 heures et plus préférentiellement encore entre 10 et 60 minutes. Ce contrôle est plus facilement réalisé lors d'une réduction par une phase gazeuse du fait de la diffusion rapide des molécules de gaz autours des grains. De plus, la nucléation de la phase métallique est lente, et peut donc être plus facilement évitée du fait de la réduction rapide par la phase gazeuse.

L'atmosphère gazeuse réductrice est préférentiellement obtenue par décomposition sous vide ou sous atmosphère inerte, d'un composé organique ou d'un mélange de composé organiques contenant, liés chimiquement, au moins de l'hydrogène et de l'oxygène, et dont la pyrolyse génère du monoxyde de carbone et / ou un mélange de dioxyde et de monoxyde de carbone, de l'hydrogène et / ou un mélange hydrogène et vapeur d'eau susceptibles d'effectuer la réduction amenant à la formation du composé LiₓM_{1-y}M'_{y}(XO₄)ₙ.

L'atmosphère gazeuse réductrice est préférentiellement obtenue par oxydation partielle par l'oxygène ou par l'air, d'un hydrocarbure et/ou de carbone appelés carbone sacrificiel.

Par carbone sacrificiel, on entend préférentiellement un carbone destiné à effectuer une réaction chimique, en particulier avec la phase gazeuse qui sert en fait de vecteur pour la réduction des précurseurs du matériau, ce carbone étant donc destiné à être consommé.

Dans le cadre de la présente invention, la teneur en vapeur d'eau est préférentiellement correspond, bornes comprises, entre 0,1 et 10 molécules d'H₂O par atome de carbone de l'hydrocarbure) à un température élevée (préférentiellement comprise entre 400 et 1.200 °C) permettant la formation de monoxyde de carbone ou d'hydrogène ou d'un mélange de monoxyde de carbone et d'hydrogène.

Selon un mode avantageux, le carbone sacrificiel est choisi dans le groupe constitué par le graphite naturel ou artificiel, le noir de carbone ou le noir d'acétylène et les cokes (préférentiellement de pétrole), le carbone sacrificiel étant préférentiellement sous forme de particules d'une taille de préférence inférieure à 15 micromètres, plus préférentiellement encore inférieure à 2 micromètres.

La quantité de carbone sacrificiel est de préférence inférieure ou sensiblement égale à la quantité requise pour réduire le mélange réactionnel sans laisser de carbone sacrificiel résiduel, cette quantité est de préférence d'un atome de carbone pour se combiner à un atome d'oxygène à des températures supérieures à 750 ° C et elle est de préférence de un atome pour se combiner à 2 atomes d'oxygène pour des températures inférieures à 750 ° C.

Selon un autre mode avantageux de réalisation, la synthèse est réalisée avec une quantité de carbone sacrifitiel est qui est (sensiblement) égale, mole pour mole à la moité de la quantité d'oxygène nécessaire à enlever du mélange de composés précurseur pour obtenir le matériau LiₓM_{1-y}M_{y}(XO₄)ₙ par réduction, lorsque la réaction est réalisée au dessous de 710°C et égale, mole pour mole à cette quantité, lorsque la réaction est réalisée en dessous de cette température.

Un deuxième objet de la présente invention est constitué par un procédé de synthèse d'un matériau comportant un noyau et un enrobage et/ou étant connectées entre elles par un pontage, le dit noyau comprenant au moins un composé de formule LiₓM_{1-y}M'_{y}(XO₄)ₙ, dans laquelle x, y et n sont des nombres tels que 0 ≤ x ≤ 2, 0 ≤< y ≤ 0,6 et 1 ≤ n ≤ 1,5, M est un métal de transition ou un mélange de métaux de transition de la première ligne du tableau périodique, M' est un élément de valence fixe choisi parmi Mg²⁺; Ca²⁺, Al³⁺, Zn²⁺ et X est choisi parmi S, P et Si, et
ledit enrobage étant constitué d'une couche de carbone,
ledit pontage étant constitué par du carbone (reliant au moins deux particules entre elles),
le dit procédé comportant la mise en équilibre intime et/ou homogène dans les proportions requises d'un mélange comprenant au moins :
- a) une source de M, une partie au moins du ou desdits métaux de transition qui composent M se trouvant dans un état d'oxydation supérieur à celui du métal dans le composé final LiₓM_{1-y}M'_{y}(XO₄)ₙ;
- b) une source d'un élément M';
- c) un composé source de lithium; et
- d) un composé source de X;
les sources des éléments M, M', Li et X pouvant être introduites, en tout ou en partie, sous forme de composés comportant plus d'un élément source, et
la synthèse se faisant par réaction et mise en équilibre du mélange dans les proportions requises des précurseurs a) à d), avec une atmosphère gazeuse réductrice, de manière à amener le ou les métaux de transition au degré de valence voulu,
la synthèse se faisant en présence d'une source de carbone appelée carbone conducteur,

la synthèse conduisant alors, par une étape de pyrolyse du composé source de carbone, conduite après ou, de préférence, simultanément aux étapes de préparation du mélange préférentiellement intime et/ou homogène) des précurseurs et de réduction du mélange obtenu, audit matériau.

Le carbone présent dans le matériau, sous forme d'enrobage et de pontage, est intimement adhérent du matériau et confère à ce dernier une conductivité électronique supérieure à celle du matériau constitué des particules correspondantes non enrobées.

Selon un mode préférentiel, l'ajout de carbone conducteur est effectué postérieurement à la synthèse de LiₓM_{1-y}M'_{y}(XO₄)ₙ.

Selon un autre mode avantageux de réalisation de l'invention, l'ajout de carbone conducteur est réalisé simultanément à la synthèse de LiₓM_{1-y}M'_{y}(XO₄)ₙ.

Les paramètres réactionnels sont choisis, en particulier la cinétique de la réduction par la phase gazeuse, de façon à ce que le carbone conducteur ne participe pas d'une manière significative au processus de réduction.

Selon une autre variante intéressante, les paramètres réactionnels de la synthèse, tels flux et composition de la phase gazeuse, température et temps de contact sont choisis de facon à ce que le carbone conducteur ne participe pas d'une manière significative au processus de réduction, c'est à dire que le processus réduction est le fait de la phase gazeuse, et en particulier de manière à ce que la température réactionnelle soit de préférence inférieure à 900°C, et le temps de réaction inférieure à 5 heures, d'une manière encore plus priviligiée de manière à ce que la température réactionnelle soit en dessous de 800°C et/ou pour des temps inférieurs à 1heure.

Selon une autre varainte de la synthèse, la valeur de x dans LiₓM_{1-y}M'_{y}(XO₄)ₙ est choisie de manière à assurer un contrôle thermodynamique et/ou une cinétique rapide de la réduction, en permettant de sélectionner des atmosphères réductrices gazeuses facilement accessibles par simple mélange de gaz ou par reformage de molécule organiques simples.

La substance organique source de carbone conducteur est sélectionnée de façon à ce que les particules du matériau obtenu après l'étape de pyrolyse possède sensiblement la forme et la distribution granulométrique des précurseurs de la réaction de synthèse.

Ainsi, la substance organique source de carbone conducteur est avantageusement sélectionnée dans le groupe constitué par les polymères et oligomères contenant un squelette carboné, les hydrates de carbone simples ou polymères et les hydrocarbures aromatiques.

La substance organique source de carbone conducteur est choisie de façon à laisser un dépôt de carbone conducteur en surface (enrobage) des particules solides constitutives du matériau et/ou, entre ces particules solides constitutives des ponts de carbone (pontage), lors de la pyrolyse.

Selon une autre variante, la source de carbone conducteur contient, dans un même composé ou dans le mélange qui constitue cette source, de l'oxygène et de l'hydrogène liés chimiquement et dont la pyrolyse libère localement de l'oxyde de carbone et / ou du dioxyde de carbone et/ou de l'hydrogène et de la vapeur d'eau contribuant, outre le dépôt de carbone, à créer localement l'atmosphère réductrice requise pour la synthèse du matériau LiₓM_{1-y}M'_{y}(XO₄)ₙ.

Ainsi, la substance organique source de carbone conducteur est au moins un des composés du groupe constitué par le polyéthylène, le polypropylène, le glucose, le fructose, le sucrose, le xylose, le sorbose, l'amidon, la cellulose et ses esters, les polymères blocs d'éthylène et d'oxyde d'éthylène et les polymères de l'alcohol furfurylique.

La source de carbone conducteur est préférentiellement ajoutée au début ou au cours de l'étape de mélange des précurseurs de la réaction a) à d).

Selon un mode préférentiel, la teneur en substance source de carbone conducteur, présent dans le milieu réactionnel soumis à réduction, est choisie de façon à ce que la teneur en carbone conducteur dans le milieu réactionnel soit préférentiellement, bornes comprises, entre 0,1 et 25 %, plus préférentiellement encore pour qu'elle soit, bornes comprises, entre 0,3 et 1,5 % de la masse totale du mélange réactionnel.

Avantageusement, dans le procédé selon le premier objet de l'invention, ainsi que dans le procédé selon le second objet de la présente invention, le traitement thermique (qui inclue la réaction de formation de LiₓM_{1-y}M'_{y}(XO₄)ₙ et la réduction et la pyrolyse) est réalisé par chauffage depuis la température ordinaire jusqu'à une température comprise entre 500 et 1.100 °C, en présence d'une atmosphère réductrice telle que précédemment définie. Cette température maximale atteinte est encore plus avantageusement comprise entre 500 et 800 °C.

Selon un autre mode de réalisation avantageux, la température et la durée de la synthèse sont choisis en fonction de la nature du métal de transition, c'est-à-dire au-dessus d'une température minimum à laquelle l'atmosphère réactive est capable de réduire le ou les éléments de transition à leur état d'oxydation requis dans le composé LiₓM_{1-y}M'_{y}(XO₄)ₙ et en dessous d'une température ou d'un temps amenant une réduction du ou des éléments de transition à l'état métallique ou une oxydation du carbone résultant de la pyrolyse de la substance organique.

Selon un autre mode de réalisation avantageux du procédé selon le second objet de la présente invention, le coeur du noyau des particules du noyau synthétisé est pour au moins 95 %, un composé LiₓM_{1-y}M'_{y}(XO₄)ₙ (préférentiellement le composé synthétisé est de formule LiMPO₄), le complément pouvant être un oxyde d'un ou des métaux des précurseurs, fonctionnant comme composé d'insertion ou inerte, du carbone, du carbonate ou ou phosphate de lithium et le taux de carbone conducteur après pyrolyse est compris entre 0,1 et 10 % en masse par rapport à la masse du composé LiMPO₄.

Le composé source de carbone conducteur est avantageusement choisi de façon à être facilement dispersable lors du mélange avec les précurseurs. Le mélange intime et ou homogène des précurseurs a) à d) est avantageusement réalisé par agitation et/ou par broyage mécanique et/ou par homogénéisation ultrasonore, en présence ou non d'un liquide, ou par spay-drying d'une solution d'un ou de plusieurs précurseurs et/ou d'une suspension et/ou d'une émulsion.

Selon un mode particulièrement avantageux de réalisation, les procédés de synthèse de la présente invention, comportent les deux étapes :
- i) de broyage intime sec ou dans un solvant des composés sources, y compris du carbone, et séchage, le cas échéant; et
- ii) de traitement thermique sous balayage d'une atmosphère réductrice contrôlée.

Les procédés selon l'invention permettent de réaliser la synthèse de matériaux possédant une conductivité, mesurée sur un échantillon de poudre compactée à une pression supérieure ou égale à 3000, de préférence de 3750 Kg.cm⁻², qui est supérieure à 10⁻⁸ Scm⁻¹.

La mesure de la conductivité est effectuée sur des poudres de l'échantillon. Cette poudre (de 100 mg à 1g environ) est mise dans un moule cylindrique creux de 1,3 cm de diamètre, réalisé en poly(oxymethylène) (Delrin®) et elle est compactée entre deux pistons d'acier inoxydable à l'aide d'une presse de laboratoire à une force de 5.10³ Kg ce qui correspond à une pression de 3750 Kg.cm⁻². La mesure de conductivité est effectuée en utilisant les pistons (plungers) comme électrodes et par la méthode de l'impédance complexe connue de la personne de la technique considérée. La conductivité est obtenue à partir de la résistance par la formule *ρ*=^{RS}/ₗ où R est la résistance mesurée, et S la surface (1,33 cm² pour 1,3 cm de diamètre), *l* l'épaisseur de l'échantillon et la résistivité est déterminée par la formule *ρ*=^{RS}/*l*.

Un des composés avantageusement préparés par le procédé selon le premier objet de la présente invention est le composé de formule LiFePO₄.

Un des matériaux avantageusement obtenu par le procédé de synthèse selon le deuxième objet de la présente invention est constitué par des particules comportant un noyau, un enrobage et ou un pontage. Le noyau des particules est essentiellement (de préférence pour au moins 95 %) constitué d'un composé de formule LiFePO₄, le complément étant constitué par d'autre composés, notamment d'autres oxydes ayant ou non une activité, ou du phosphate de lithium ou du phosphate ferrique et dans lequel, l'enrobage et/ou le pontage des particules du matériau par le carbone représente préférentiellement une teneur en carbone conducteur comprise entre 0,2 et 5 %, préférentiellement comprise entre 0,3 et 3 % par rapport à la masse totale du matériau obtenu.

Le composé source de fer, en particulier le composé source de fer dans la synthèse du composé de formule LiFePO₄, est choisi au moins partiellement dans le groupe constitué par les phosphates de fer, les oxy- ou hydroxyphosphates de fer, les oxydes de fer les oxy- ou hydroxyphosphates de fer et les oxydes de fer et de lithium, dans lesquels au moins une partie du fer est à l'état d'oxydation III, ainsi que les mélanges de ces derniers.

Le composé source de lithium est avantageusement, le phosphate de lithium, le dihydrogénophosphate de lithium, le carbonate de lithium, l'acétate de lithium, ou l'hydroxyde de lithium, ainsi que les mélanges de ces derniers.

Le composé source de phosphore est avantageusement un phosphate d'ammonium, de l'acide ortho-, méta- ou pyro-phosphorique, ou du pentoxyde de phosphore.

Le procédé de synthèse selon l'invention peut être réalisée dans le réacteur servant ou ayant servi pour la préparation du mélange des précurseurs ou dans un réacteur différent (de préférence dans un reformer).

Un troisième objet est constitué par des particules d'un composé de formule LiₓM_{1-y}M'_{y}(XO₄)ₙ, dans laquelle x, y et n sont des nombres tels que 0 ≤ x ≤ 2, 0 ≤ y ≤ 0,6, et 1≤n≤1,5, M est un métal de transition ou un mélange de métaux de transition de la première ligne du tableau périodique, M' est un élément de valence fixe choisi parmi Mg²⁺, Ca²⁺, Al³⁺, Zn²⁺ et X est choisi parmi S, P et Si, ledit composé ayant une conductivité, mesurée sur un échantillon de poudre compactée à une pression de 7350 Kg.cm⁻², qui est supérieure à 10⁻⁸ S.cm⁻¹, les particules ayant une taille comprise entre 0,05 micrométres et 15 micromètre, de préférence entre 0,1 et 10 micromètres.

Un quatrième objet de la présente invention est constitué par un matériau susceptible d'être obtenu par un procédé selon le deuxième objet de la présente invention, comportant un noyau et un enrobage et/ou un pontage, ledit matériau présentant une teneur totale en carbone supérieure à 0,1 %, de préférence comprise entre 0,1 et 0,2 % de la masse totale du matériau.

Selon la réalisation de ce quatrième : objet, le dit noyau comprenant au moins un composé de formule LiₓM_{1-y}M'_{y}(XO₄)ₙ, dans laquelle x, y et n sont des nombres tels que 0 ≤ x ≤ 2, 0<y ≤ 0,6, et 1<n≤1,5, M est un métal de transition ou un mélange de métaux de transition de la première ligne du tableau périodique, M' est un élément de valence fixe choisi parmi Mg²⁺, Ca²⁺, Al³⁺, Zn²⁺ et X est choisi parmi S, P et Si, ledit matériau ayant une conductivité mesurée sur un échantillon de poudre compactée à une pression de 3750 Kg.cm⁻² qui est supérieure à 10⁻⁸ Scm⁻¹.

Un cinquième objet de la présente invention est constitué par un matériau comportant un noyau et un enrobage et ou un pontage, le dit noyau comprenant au moins un composé de formule LiₓM_{1-y}M'_{y}(XO₄)ₙ, dans laquelle x, y et n sont des nombres tels que 0 ≤ x ≤ 2, 0 ≤ y ≤ 0,6, et 1≤n≤1,5, M est un métal de transition ou un mélange de métaux de transition de la première ligne du tableau périodique, M' est un élément de valence fixe choisi parmi Mg²⁺, Ca²⁺, Al³⁺, Zn²⁺ et X est choisi parmi S, P et Si, ledit matériaux ayant une conductivité, mesurée sur un échantillon de poudre compactée à une pression comprise entre de 3750, qui est supérieure à 10⁻⁸ S.cm⁻¹. Les matériaux ainsi obtenus possède, selon la méthode de mesure ci-après explicitée, une bonne conductivité qui dans certains cas est supérieure à 10⁻⁸ Scm⁻¹ sur un échantillon de poudre compactée et une de carbone supérieure à 0,1 %, de préférence comprise entre 0,1 et 0,2 % de la masse totale du matériau.

Les utilisations de ces matériaux sont très importantes dans le domaine de l'électrochimie, comme matériau d'électrode, utilisés seuls ou en mélange avec d'autres matériaux électroactifs, en particulier dans les cellules servant de générateur primaire ou secondaire, associes éventuellement en pile ou accumulateurs ; dans les super capacités, systèmes capables de stocker de l'énergie électrique avec des puissances importantes (≥ 800 Wl⁻¹), dans les systèmes de modulation de la lumière comme les électrochromes et les miroirs anti-éblouissement pour les automobiles. Dans les systèmes de séparation ou de purification des métaux, en particulier du lithium, depurification de l'eau, dans les réactions d'oxydation ou de réduction en synthèse organiques; dans le cas de réaction d'oxydation, il peut être nécessaire de delithier, chimiquement ou électrochimiquement le matériau pour augmenter son pouvoir oxydant.

**Un sixième objet** est constitué par les cellules électrochimiques comprenant au moins deux électrodes et au moins un électrolyte, ces cellules étant caractérisées en ce qu'au moins une de leurs électrodes comprend au moins un composé selon le troisième objet.

**Un septième objet** de la présente invention est constitué par des cellules électrochimiques comprenant au moins deux électrodes et au moins un électrolyte, ces cellules étant caractérisées en ce qu'au moins une de leurs électrodes comprend au moins un matériau selon le quatrième objet de l'invention.

Ces cellules sont préférentiellement conçues de façon que l'électrolyte est un polymère, solvatant ou non, optionnellement plastifié ou gélifié par un liquide polaire contenant en solution un ou plusieurs sels métalliques, à titre d'exemple.

De façon avantageuse, l'électrolyte est un liquide polaire immobilisé dans un séparateur microporeux et contenant en solution un ou plusieurs sels métalliques, à titre d'exemple au moins un des sels métalliques est un sel de lithium.

Préférentiellement, au moins une des électrodes négatives est constituée par du lithium métallique, un alliage de lithium, notamment avec l'aluminium, l'antimoine, le zinc, l'étain, éventuellement en mélange nanomoléculaire avec de l'oxyde de lithium, ou un composé d'insertion du carbone, notamment du graphite, un nitrure double de lithium et de fer, de cobalt ou de manganèse, un titanate de lithium de formule LiₓTi_{(5+3y)/4}O₄, avec 1 ≤ x ≤ (11-3y)/4 (ou) avec 0 ≤ y ≤ 1.

Selon un autre mode de réalisation des cellules selon l'invention, au moins une des électrodes positives contient un des produits susceptibles d'être obtenu par un procédé selon l'invention, utilisé seul ou en mélange avec un oxyde double de cobalt et le lithium, ou un avec un oxyde complexe de formule LiₓNi_{1-y-z-q-r}Co_{y}Mg_{z}AlᵣO₂ avec 0,1 ≤ x ≤ 1, 0 ≤ y, z et r ≤ 0,3 ou avec un oxyde complexe de formule LiₓMn_{1-y-z-q-r}Co_{y}Mg_{z}AlrO₂-qF_{q} avec 0,05 ≤ x ≤ 1 et 0 ≤ y, z, r, q ≤ 0,3.

Le polymère utilisé pour lier les électrodes ou comme électrolytes est un avantageusement un polyéther, un polyester, un polymère basé sur les unités méthacrylate de méthyle, un polymère à base d'acrylonitrile, et/ou de fluorure de vinylidène,, ou un mélange de ces derniers.

De façon préférentielle, la cellule comporte un solvant qui est de préférence un solvant non protogénique qui comprend du carbonate d'éthylène ou de propylène, un carbonate d'un alkyle ayant de 1 à 4 atomes de carbone, de la γ-butyrolactone, une tétraalkylsufamide, un *α*-ω dialkyléther d'un mono-, di-, tri-, tetra- or oligo-éthylene glycol de poids moléculaire inférieur ou égal à 5000, ainsi que les mélange des solvants susnommés.

Les cellules selon l'invention fonctionnent préférentiellement comme générateur primaire ou secondaire, comme super-capacité ou comme système de modulation de la lumière.

Selon un autre mode préférentiel, les cellules électrochimiques selon la présente invention fonctionnent comme super capacité, caractérisé en ce que le matériau de l'électrode positive est un matériau selon le troisième, quatrième ou le cinquième objet de la présente invention, et l'électrode négative un carbone de surface spécifique supérieure à 50 m².g⁻¹ sous forme de poudre, de fibre ou de composite mésoporeux de type composite carbone-carbone.

Selon un autre mode de réalisation, les cellules électrochimiques fonctionnent comme système de modulation de la lumière et en ce que la contre-électrode optiquement inactive est un matériau selon le troisième, quatrième et cinquième objet de la présente invention épandu en couche mince sur un support transparent conducteur, de type verre ou polymère recouvert d'un oxyde d'étain dopé (SnO₂:Sb ou SnO₂:F) ou d'un oxyde d'indium dopé (In₂O₃:Sn).

### Modes préférentiels

L'invention proposée porte sur une nouvelle voie de synthèse simplifiée des composés LiₓMXO₄ à structure olivine obtenus par réduction d'un mélange dans lequel au moins une partie du métal de transition M se trouve dans un état d'oxydation supérieur à celui du composé final LiMPO₄. Un autre avantage surprenant de la présente invention est d'être également compatible avec la synthèse décrite dans CA-A-2.270.771, qui conduit à des performances optimisées. Dans ce cas, le composé organique, source de carbone, est ajouté au mélange des réactifs de départ contenant au moins une partie du métal de transition dans un état d'oxydation supérieur à celui du composé lithium LiMPO₄ et la synthèse simplifiée conduit directement au matériau recouvert de carbone. La simplification porte notamment sur la réduction du nombre des étapes et surtout du nombre des étapes où il faut contrôler l'atmosphère. On peut se référer pour cela à l'ouvrage "Modem Batteries", de C.A. Vincent,& B. Scrosati, Arnold publishers, London, Sydney, Auckland, (1997).

Les améliorations portent également sur la reproductibilité de la synthèse, sur le contrôle de la taille et de la distribution des particules, ainsi que sur la réduction du nombre et du coût des réactifs de départ et bien entendu du matériau final. Cette synthèse, lorsque combinée à l'enseignement de CA-A-2.270.771, permet également de contrôler la teneur en carbone du matériau final.

Nous rapportons ici, pour la première fois la synthèse d'un composé LiₓMXO₄ de type olivine, en l'occurrence LiFePO₄, réalisée par réduction d'un sel de fer III. Les sels de départ n'étant plus sensibles à l'oxydation, le processus de synthèse s'en trouve très simplifié. De plus l'utilisation possible de Fe₂O₃ comme source de fer réduit considérablement le coût de synthèse de LiFePO₄. Ce matériau aurait alors la préférence face à d'autres matériaux de cathode pour batterie au lithium, tels que les oxydes de cobalt ou de nickel dans le cas des accumulateurs de type lithium-ion, ou les oxydes de vanadium V₂O₅ ou analogues moins inoffensifs pour l'environnement.

LiFePO₄ peut être préparé à partir d'un sel de fer III, stable à l'air, par exemple FePO₄.2H₂O ou Fe₂O₃ ou de toute autre source de fer III. La source de lithium étant par exemple Li₂CO₃ dans le premier cas, ou LiOH. LiH₂PO₄ ou Li₃PO₄ étant utilisé comme source conjointe de lithium et de phosphore dans le second cas. Les mélanges stoechiométriques ainsi que le précurseur de carbone sont traités à 700°C pendant 4 heures sous balayage d'un excès d'atmosphère réductrice de façon à réduire l'état d'oxydation du fer. Le choix de l'atmosphère et de la température de synthèse sont très importants afin de pouvoir réduire le fer III en fer II sans que l'atmosphère gazeuse ou le carbone présent ne puissent réduire le fer à l'état métallique. Cette dernière sera préférentiellement, mais de façon non-limitative, constituée par exemple d'hydrogène, d'ammoniac, d'un mélange gazeux capable de fournir de l'hydrogène dans les conditions de la synthèse, l'hydrogène pouvant être utilisé pur ou dilué dans un gaz inerte sec ou hydraté, d'oxyde de carbone, éventuellement mélangé avec de dioxyde de carbone et/d'un gaz neutre sec ou hydraté. La température maximale du traitement thermique est choisie de telle sorte que le carbone présent soit thermodynamiquement stable vis-à-vis du fer II et de préférence vis-à-vis de la phase gazeuse. Dans le cas du fer, la zone de température limite se situe entre 500 et 800°C, de préférence vers 700°C. Au-delà de ces températures, le carbone devient suffisamment réducteur pour réduire le fer II en fer métallique. Dans le cas des autres métaux de transition, toute personne du métier pourra utiliser les courbes d'Ellingham pour adapter la température et la nature de l'atmosphère gazeuse de façon à obtenir un résultat équivalent.

Un aspect inattendu et surprenant de l'invention, qui en fait son avantage, est la relative inertie chimique du carbone déposé à la surface du matériau par rapport aux réactions permettant de réduire le degré d'oxydation du métal de transition, en particulier, du fer. Du point de vue thermodynamique, le carbone formé par décomposition de la substance organique pyrolysée a un pouvoir suffisamment réducteur pour s'oxyder en CO₂ ou CO et réduire, même sous atmosphère inerte, le Fer III en Fer II, ce qui aurait rendu le contrôle de la teneur du produit final en carbone difficile. Les inventeurs ont remarqué que la réaction de réduction était en quasi-totalité due à l'action de l'atmosphère gazeuse réductrice, dont la cinétique est plus rapide que celle due à l'action du carbone déposé en surface, malgré le contact intime entre les deux phases solides (carbone et matériau rédox). En employant une atmosphère réductrice, préférentiellement à base d'hydrogène, d'ammoniac ou d'oxyde de carbone, la réduction du fer par le carbone solide n'est pas favorisée cinétiquement, et le Fer III est réduit en Fer II principalement par réaction avec l'atmosphère réductrice. La teneur en carbone dans le produit final correspond donc pratiquement au rendement de décomposition de la substance organique, ce qui permet de contrôler ladite teneur.

Les exemples suivants sont donnés afin de mieux illustrer la présente invention, mais ils ne sauraient être interpréter comme constituant une limitation de la portée de la présente invention.

### EXEMPLES

### Exemple 1 - Synthèse de LiFePO₄ à partir du phosphate de fer sous atmosphère réductrice.

LiFePO₄ a été préparé par réaction de FePO₄.2H₂O et Li₂CO₃ en présence d'hydrogène. Dans une première étape, les quantités stoechiométriques des deux composés sont broyées ensemble dans l'isopropanol, puis chauffées progressivement (6 C par minute jusqu'à 700°C) dans un four tubulaire sous balayage de gaz réducteur (8% d'hydrogène dans de l'argon). Cette température est maintenue pendant une heure. L'échantillon est refroidi en 40 minutes soit avec une vitesse de refroidissement d'environ 15 °C par minutes.

Durant tout le traitement thermique et également y compris lors de la descente en température, le flux de gaz réducteur est maintenu. La durée totale du traitement thermique est d'environ 3 heures et demie.

La structure de l'échantillon a été vérifiée par diffraction RX et les raies correspondent à celles de la triphylite LiFePO₄ pure.

### Exemple 1' - Préparation de LiFePO₄ enrobé de carbone synthétisé à partir de l'échantillon préparé à l'exemple 1

La triphylite obtenue à l'exemple 1 est imprégnée d'une solution d'acétate de cellulose (teneur de 39,7 % en poids d'acetyl, poids moléculaire moyen M_{w} de 50.000) dans l'acétone. La quantité d'acétate de cellulose ajoutée représente 5% du poids de triphylite traitée. L'utilisation d'un précurseur de carbone en solution permet une parfaite répartition sur les particules de triphylite. Après séchage, le mélange est placé dans le four décrit précédemment, sous balayage d'une atmosphère d'argon. La température est augmentée de 6°C par minute jusqu'à 700 °C. Cette dernière température est maintenue une heure. L'échantillon est alors refroidi progressivement, toujours sous balayage d'argon. Cet échantillon contient 1% en poids de carbone, ce qui correspond à un rendement de carbonisation de l'acétate de cellulose de 20%.
Le matériau présente une conductivité électronique de surface. Cette dernière a été mesurée sur une pastille de poudre compactée. Une force de 5 tonnes est appliquée lors de la mesure sur un échantillon de 1,3 cm de diamètre. Dans ces conditions, la conductivitée électronique mesurée est de 5.10⁻⁵ S.cm⁻¹.

### Exemple 1" - Comparaison du comportement électrochimique des matériaux préparés aux exemples 1 et 1' en cellules électrochimiques.

Les matériaux préparés à l'exemple 1 et 1' ont été testés dans des piles boutons du type CR 2032 en batteries lithium polymère à 80°C. Les cathodes ont été préparées en mélangeant ensemble la poudre du matériau actif avec du noir de carbone (Ketjenblack®) pour assurer l'échange électronique avec le collecteur de courant et du poly(oxyde d'éthylène) de masse 400.000 utilisé comme agent liant d'une part et conducteur ionique d'autre part. Les proportions en poids sont 51:7:42. De l'acétonitrile est ajouté au mélange pour dissoudre le poly(oxyde d'éthylène) en quantité suffisante pour former une suspension homogène. Cette suspension obtenue est ensuite coulée sur un disque d'acier inoxydable de 1,cm². La cathode ainsi préparée est séchée sous vide, puis transférée en boîte à gants sous atmosphère d'hélium (< 1ppm H₂O, O₂). Une feuille de lithium (27 µm) laminée sur un substrat de nickel a été utilisée comme anode. L'électrolyte polymère était composé de poly(oxyde d'éthylène) de masse 5.000.000 et de sel de lithium de la bistrifluorisulfoninimide Li[(CF₃SO₂)₂N]) (ci-après LiTFSI) dans les proportions oxygène des unités oxyéthylène / ions lithium de 20:1.

Les expériences électrochimiques ont été menées à 80°C, température à laquelle la conductivité ionique de l'électrolyte est suffisante (2 × 10⁻³ Scm⁻¹).

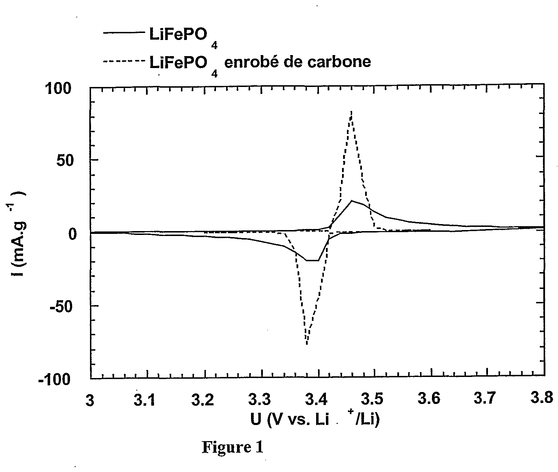

La Figure 1 montre le premier cycle obtenu par voltamétrie lente, une technique bien connue de l'homme de l'art (20 mV.h⁻¹) contrôlée par un cycleur de batterie de type Macpile® (Biologie™, Claix, France) des échantillons préparés à l'exemple 1 et 1'.

Le composé non carboné de l'exemple 1 présente les pics d'oxydo-réduction caractéristiques de LiFePO₄. La capacité échangée lors du processus de réduction représente 74 % de la valeur théorique. Les cinétiques de réaction sont lentes et la décharge s'étend jusqu'à 3 Volts. Ces limitations de capacités et de cinétiques de réactions sont couramment observées pour des échantillons de LiFePO₄ non carbonés. Le composé carboné de l'exemple 1' montre des pics d'oxydo-réduction bien définis et des cinétiques de réaction beaucoup plus rapides que ceux du matériau issu de la synthèse décrite dans l'exemple 1. La capacité atteinte en décharge est de 87 % de la valeur théorique ce qui représente une amélioration de la capacité du générateur électrochimique de 17% par rapport à celle de l'échantillon non carboné de l'exemple 1.

### Exemple 2: Synthèse de LiFePO₄ carboné à partir du phosphate de fer sous atmosphère réductrice.

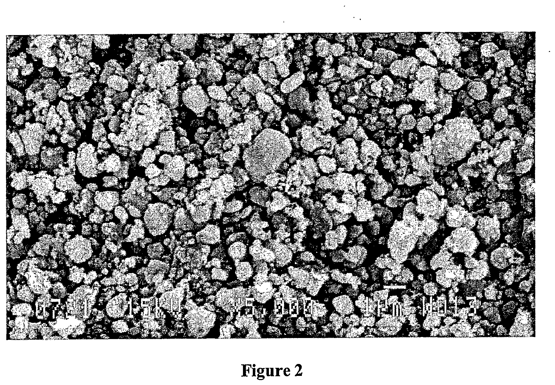

LiFePO₄ carboné a été préparé par réaction réductrice de FePO₄.2H₂O et Li₂CO₃ en présence d'hydrogène. Dans une première étape, les quantités stoechiométriques des deux composés ainsi que la source de carbone (acétate de cellulose, (teneur de 39,7 % en poids d'acetyle, poids moléculaire moyen M_{w} de 50.000), en faible proportion (5% en poids par rapport au poids de FePO₄ 2H₂O, soit 4.2% par rapport au poids du mélange FePO₄.2H₂O et Li₂CO₃) sont broyées ensemble dans l'isopropanol. Le solvant est évaporé et le mélange soumis au traitement thermique décrit dans les exemples 1 et 1'. Durant tout le traitement thermique et également lors de la descente en température, l'atmosphère réductrice est imposée par un balayage d'un mélange de 8% d'hydrogène dans de l'argon. La structure de l'échantillon a été vérifiée par diffraction RX et les raies correspondent à celles de la triphylite LiFePO₄ pure.
L'échantillon préparé est composé de très fines particules de l'ordre du micron (Figure 2). Ces particules sont recouvertes d'une fine couche de carbone dont le poids représente 1,2% du poids total de l'échantillon, mesuré par gravimétrie après dissolution du noyau de LiFePO₄ dans l'acide chlorhydrique 2M.

Le matériau présente une conductivité électronique de surface. Cette dernière a été mesurée suivant la procédure décrite dans l'exemple 1'. Dans ces conditions, la conductivité électronique mesurée est de 2.10⁻³ S.cm⁻¹.

Compte tenu de la quantité résiduelle de carbone dans l'échantillon, le rendement de carbonisation de l'acétate de cellulose lors de cette synthèse est de 20%. Il est important de noter que ce rendement est identique à celui obtenu dans l'exemple 1' où la triphylite LiFePO₄ est déjà formée et ne nécessite aucune étape de réduction.

Il est donc évident que le carbone issu de la décomposition de l'acétate de cellulose n'est pas consommé et n'intervient pas dans la réaction de réduction du fer III en fer II. Cette réduction se fait donc par l'intermédiaire de la phase gazeuse.

### Exemple 2' Comparaison du comportement électrochimique de la triphylite LiFePO₄ carbonée préparée à l'exemple 1 avec celui d'un échantillon de triphylite carboné synthétisé par une autre voie.

Le matériau préparé à l'exemple 2 a été testé dans des piles boutons du type CR 2032 décrites dans l'exemple 1". Pour comparaison, nous reportons également quelques résultats obtenus pour le meilleur échantillon carboné synthétisé à partir de fer II (vivianite Fe₃(PO₄)₂.8H₂O) et dont la synthèse a été décrite antérieurement dans CA-A-2.270.771.

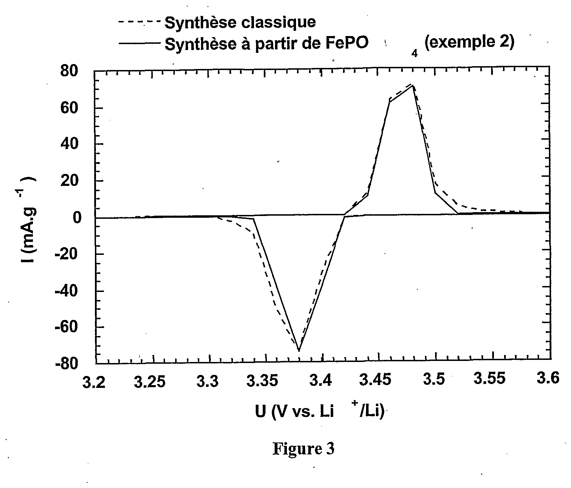

La Figure 3 présente le 5ème cycle obtenu par voltammétrie lente (20 mV.h⁻¹) contrôlée par un cycleur de batterie de type Macpile® avec l'échantillon issu de la synthèse classique (traits pointillés) d'une part et avec celui obtenu exemple 2 (traits pleins) d'autre part. Les deux synthèses conduisent à des échantillons ayant le même comportement électrochimique sur le plan des potentiels d'oxydoréduction et des cinétiques électrochimiques.

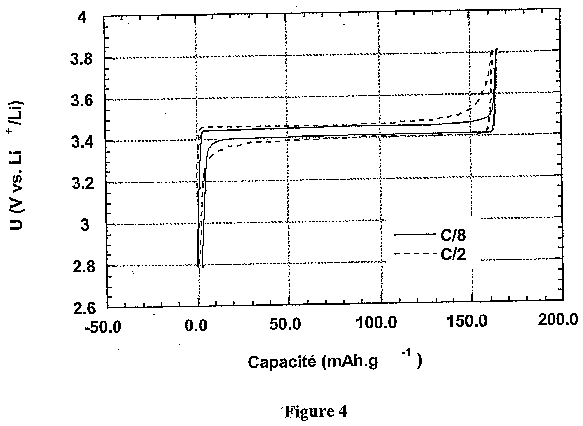

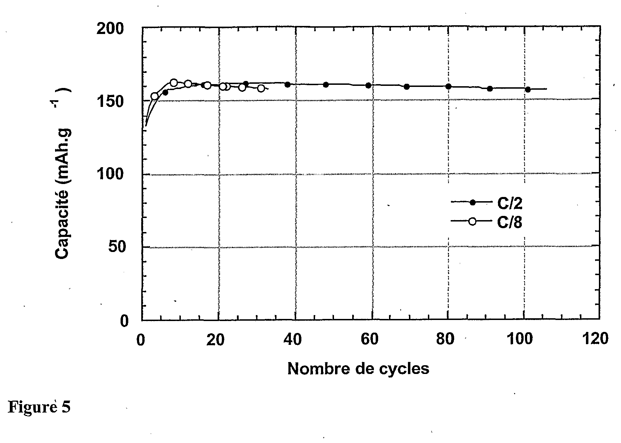

Les profils de charge et de décharge de batteries assemblées avec l'échantillon issu de la synthèse décrite dans l'exemple 2 sont présentés figure 4 pour deux régimes. Ces résultats sont obtenus en mode galvanostatique entre 2,8 et 3,8 Volts pour deux vitesses de charge et décharge C/8 et C/2 (le courant imposé (exprimé en mA) lors de la charge ou de la décharge correspond à 1/8 (respectivement 1/2) de la capacité théorique de la batterie exprimées en mAh). Nous avons reporté le 20 ème cycle et dans les deux cas le plateau de décharge est plat et les capacités mises en jeu correspondent à 95 % de la capacité théorique.
L'évolution des capacités échangées lors de la décharge est représentée figure 5. Dans les deux cas, la capacité initiale est d'environ 80 % de la capacité théorique mais, après une dizaine de cycles, elle est supérieure à 95 % c'est-à-dire à 160 mAh.g⁻¹, et reste stable sur la durée de l'expérience. Ces résultats sont comparables à ceux obtenus avec la synthèse classique (réaction du phosphate de fer divalent (vivianite) avec le phosphate de lithium).

### Exemple 3 : Contrôle de la quantité de carbone

Des échantillons de triphylite avec différentes teneurs en carbone ont été préparés par réaction de FePO₄.2H₂O et Li₂CO₃ en présence d'un mélange CO/CO₂ 1/1 en volume. Cette atmosphère a été choisie pour son pouvoir réducteur vis à vis du fer III, tout en maintenant une stabilité du fer II en particulier en fin du cycle de montée en température de synthèse à 700 °C. Dans une première étape, les quantités stoechiométriques des deux composés ainsi que l'acétate de cellulose sont broyées ensemble dans l'isopropanol. Les quantités d'acétate de cellulose ajoutées représentent 2,4 et 5 % respectivement du poids du mélange. Après séchage ces mélanges sont chauffés progressivement (6 °C par minute jusqu'à 700°C) dans un four tubulaire sous balayage du gaz réducteur (CO/CO₂ : 1/1). Cette température est maintenue pendant une heure. L'échantillon est refroidi en 40 minutes soit avec une vitesse de refroidissement d'environ 15 °C par minute. Durant tout le traitement thermique et également y compris lors de la descente en température, le flux de gaz réducteur est maintenu. La durée totale du traitement thermique est d'environ 3 heures et demie.

La structure des échantillons a été vérifiée par diffraction RX et les raies correspondent dans tous les cas à celles de la triphylite LiFePO₄ pure.

Les teneurs de carbone ont été déterminées par analyse élémentaire. Les résultats ainsi que les conductivités électroniques des échantillons sont reportées dans le tableau 1 suivant.

**Tableau 1**

| % acétate cellulose | Teneur en C | Rendement (C) | conductivité |
|---|---|---|---|
| 2 | 0,62 | 0,22 | 2.10⁻⁶ S.cm⁻¹ |
| 4 | 1,13 | 0,2 | 1.10⁻³ S.cm⁻¹ |
| 5 | 1,35 | 0,19 | 4.10⁻² S.cm⁻¹ |

Dans les trois cas le rendement de carbonisation (rendement (C) du tableau 1 de l'acétate de cellulose est proche de 20%.

La quantité de carbone résiduel influe de façon importante sur la conductivité électronique. Comme on peut le noter, les quantités de carbone conducteur sont proportionnelles à la quantité de précurseur ajouté (acétate de cellulose). Ceci démontre d'une manière formelle que le carbone conducteur ne participe pas à la réduction du Fer (III) en présence d'atmosphère gazeuse réductrice, cette dernière réduisant le composé du fer avec une cinétique plus rapide.

### Exemple 3' - Comparaison du comportement électrochimique des échantillons de triphylite carbonée préparée à l'exemple 3.

Les matériaux préparés à l'exemple 3 ont été testés dans des piles boutons du type CR 2032 décrites dans l'exemple 1".

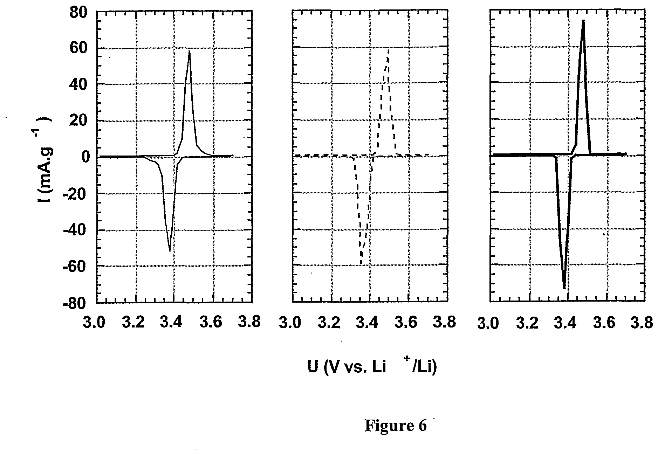

La Figure 6 présente le 5ème cycle obtenu par voltammétrie lente (20 mV.h⁻¹) contrôlée par un cycleur de batterie de type Macpile® avec :
- l'échantillon contenant 0,62% en carbone (traits pleins);
- l'échantillon contenant 1,13% en carbone (traits pointillés); et
- l'échantillon contenant 1,35% de carbone (traits gras).

Les principales caractéristiques du comportement électrochimique de ces échantillons sont résumées dans le tableau 2 suivant :

**Tableau 2**

| | | | |
|---|---|---|---|
| % carbone | 0.62 | 1.13 | 1.35 |
| Capacité (mAh.g⁻¹) | 150 | 160 | 163 |
| % capacité théorique | 88 | 94 | 96 |
| I pic (mA) | 52 | 60 | 73 |

La quantité de carbone résiduelle influe de façon significative sur la capacité des échantillons. De plus, l'augmentation du courant de pic avec le taux de carbone traduit une amélioration des cinétiques de réactions. Cette dernière reflète l'augmentation de la conductivité électronique avec le taux de carbone explicité à l'exemple 3.
La voie de synthèse décrite dans l'exemple 3 permet de contrôler de façon fiable et reproductible le taux de carbone dans le matériau final. Ce qui est primordiale compte tenu de l'influence du taux de carbone sur les propriétés électrochimiques.

### Exemple 4 - Contre- exemple de réduction par le carbone

LiFePO₄ a été préparé par réaction de FePO₄.2H₂O et Li₂CO₃ en présence de carbone, sous atmosphère inerte suivant la procédure décrite dans la demande PCT portant le numéro WO 01/53198.

Le produit stable de l'oxydation du carbone est CO₂ au dessous de 710°C et CO au dessus. De plus, au dessus de 400 °C, CO₂ réagit sur l'excès de carbone pour former CO. Cette dernière réaction est équilibrée et le ratio CO/CO₂ dépend de la température. Il est donc délicat de déterminer la quantité de carbone à ajouter au mélange FePO₄.2H₂O et Li₂CO₃. Si seul CO₂ est produit, 1/4 de mole de carbone suffit pour réduire une mole de fer III en fer II, et si seul CO est produit, 1/2 mole de carbone est nécessaire pour la même réaction.

Cette synthèse a été réalisée pour deux compositions de mélange différentes : Premier mélange (mélange 4A), identique à celui du brevet WO 01/53198
1 mole de FePO₄.2H₂O
1/2 mole de Li₂CO₃.
1 mole de C
Dans le cas ou seul CO serait produit lors de la réduction du fer III cette stoechiométrie correspondrait à un excès de carbone de 100%.
Deuxième mélange (mélange 4B)
1 mole de FePO₄.2H₂O
1/2 mole de Li₂CO₃
1/2 mole de C
Mélange stoechiométrique si seul CO est produit lors de la réduction du fer.
La procédure de synthèse suivie est celle proposée dans WO 01153198 : les mélanges ont été broyés dans l'isopropanol puis séchés. La poudre est alors pressée sous forme de pastille. Ces dernières sont placées dans un four tubulaire sous balayage d'argon. La température du four est amenée progressivement à 750 °C avec une vitesse de chauffe de 2°C par minute. L'échantillon est maintenu à 750°C pendant 8 heures selon WO 01/53198 avant d'être refroidi à 2°C par minute jusqu'à température ambiante. Durant toute la durée du traitement thermique, l'enceinte du four est balayée par un courant d'argon. La durée totale de ce traitement thermique est de 20 heures. Les pastilles sont ensuite pulvérisées. Les analyses élémentaires montrant que les deux échantillons contiennent du carbone sont rapportées dans le tableau 3 suivant :

**Tableau 3**

| | Carbone initial (Mol) | Carbone final % échantillon | Carbone Résiduel (Mol) | Carbone consommé Mol |
|---|---|---|---|---|
| Echantillon A | 1 | 5,87 | 0,82 | 0,18 |
| Echantillon B | 0,5 | 1,7 | 0,23 | 0,27 |

La synthèse B montre que seulement environ 1/4 de mole de carbone, par transformation en CO₂ a été consommée pour réduire une mole de fer III en fer II, bien que la température finale soit supérieure à 710 °C. Ce qui confirme la difficulté de contrôler la stoechiométrie par ce mode de réduction.
Lors de la synthèse de l'échantillon A réalisée selon l'enseignement de WO 01/53198 la quantité de carbone consommée est insuffisante pour que la réaction de réduction du fer III en fer II ait été complète. En augmentant la quantité de carbone, on diminue la probabilité d'avoir les points de contact triples entre phosphate de fer, carbonate de lithium et carbone nécessaire à la formation de LiFePO₄.
Lors de cette synthèse, le rendement maximum de formation de LiFePO₄ est de 80 %. En tenant compte du carbone résiduel présent, la pureté de l'échantillon A est d'environ 75%. Cette considération corrobore l'activité électrochimique médiocre de 70% obtenue selon l'enseignement de WO 01/53198.

### Exemple 4' - Comportement électrochimique de l'échantillon B synthétisé dans l'exemple 4

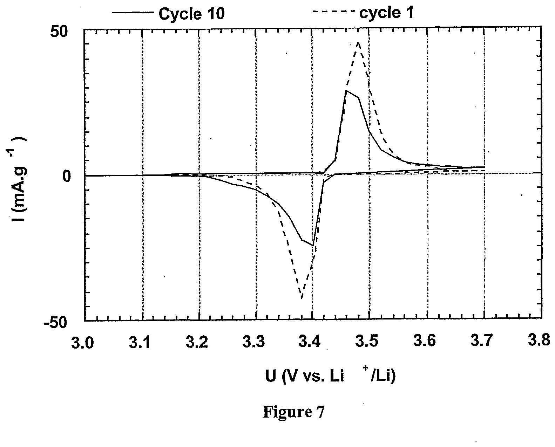

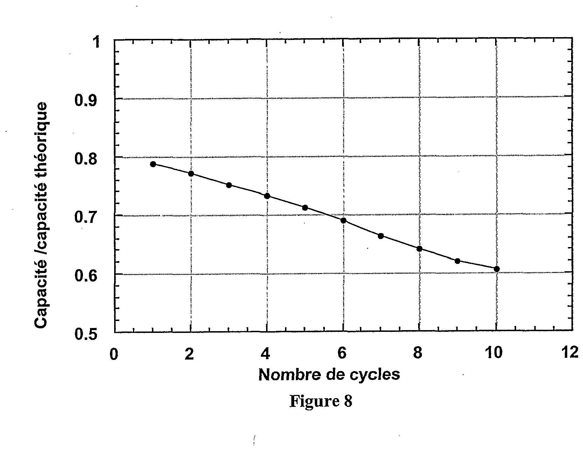

Le matériau 4B préparé à l'exemple 4 a été testé dans des piles boutons du type CR 2032 décrites dans l'exemple 1". La figure 7 présente le premier (traits pointillés) et le 10^{ème} (traits pleins) cycles obtenus par voltamétrie lente (20 mV.h⁻¹) contrôlée par un cycleur de batterie de type Macpile® La Figure 8 illustre l'évolution de la capacité de la batterie avec le cyclage.
Ces deux figures montrent une détérioration rapide du comportement électrochimique de l'échantillon. Les cinétiques sont plus lentes dès le 10^{ème} cycle. De plus après 10 cycles, la batterie a perdu 23% de sa capacité initiale. Ce comportement est généralement observé pour des échantillons de LiFePO₄ non recouvert de carbone. Le carbone résiduel, dispersé dans le matériau, n'a pas le même effet bénéfique que le carbone enrobant les grains de LiFePO₄ et provenant de la décomposition d'une substance organique.

### Exemple 5 : Réduction par les substances produites lors de la décomposition d'une substance organique.

### Réduction par l'acétate de cellulose (39,7% en poids de groupements acétyle)

Dans une première étape, les quantités stoechiométriques des deux composés FePO₄.2H₂O et Li₂CO₃ ainsi que l'acétate de cellulose sont broyées ensemble dans l'acétone. La quantité d'acétate de cellulose ajoutée représente 5 % du poids du mélange initial.

Par exemple :
FePO₄.2H₂O : 186.85 g
Li₂CO₃ : 36.94 g
Acétate de cellulose 11.19 g

Après séchage, le mélange est placé dans un four tubulaire sous balayage d'argon UHP (ultra High Purity) ; ce gaz circule de plus à travers un piège à oxygène dont la teneur résiduelle est < 1vpm). Le four est chauffé progressivement à 6°C par minutes jusqu'à 200°C. Cette température est maintenue 20 minutes pour déshydrater le phosphate de fer. La température est augmentée avec la même vitesse de chauffe jusqu'à 400°C. Cette température est maintenue 20 minutes pour décomposer l'acétate de cellulose et le carbonate de lithium. Après une troisième rampe à 6°C par minutes jusqu'à 700°C, où l'échantillon est maintenu une heure pour undure une meilleure cristallinité, l'échantillon est refroidi progressivement. Durant tout le traitement thermique et également y compris lors de la descente en température, le flux de gaz inerte est maintenu.

La structure des échantillons a été vérifiée par diffraction RX et les raies correspondent dans tous les cas à celles de la triphylite LiFePO₄ pure.
L'analyse élémentaire montre que l'échantillon contient 0.74% de carbone (0.098 mole de carbone par mole de LiFePO₄).

La conductivité électronique mesurée comme décrit dans l'exemple 1' est 5.10⁻⁴ S.cm⁻¹.

Le rendement de carbonisation de l'acétate de cellulose donné dans la littérature est de 24%. A partir des 11.19 g d'acétate de cellulose on doit obtenir 2.68g soit 0.22 mole de carbone. En fin de réaction il reste 0.098 mole de carbone. La quantité de carbone consommée n'est pas suffisante pour expliquer la réduction du fer III en fer II par le carbone.

Pour expliquer la réduction du ferIII en fer II il faut considerer l'intervention d'une phase gazeuse locale réductrice provenant de la décomposition de l'acétate de cellulose.
L'acétate de cellulose peut s'écrire C₆H₁₀₋ₓO₅(CH₃CO)ₓ. ; avec 39.7 % en poids de groupements acétyle, le calcul donne x = 2.44, la formule de ce produit est donc C₆H_{7.56}O₅(CH₃CO)_{2.44} avec une masse molaire moyenne de 265.
L'acétate de cellulose étant un hydrate de carbone donc son pouvoir réducteur peut se calculer en ne tenant compte que du nombre d'atomes de carbone total soit 10.88 dans le produit utilisé. Avec un pouvoir réducteur de 4 électrons par mole de carbone.
Initialement le mélange contient 4.2.10⁻² Mole d'acétate de cellulose soit 0.459 Mol de carbone. Le produit final contient 9.8 10⁻² Mole de carbone. 0.36 Mole de carbone ont été consommée, ce qui est suffisant pour expliquer la synthèse de LiFePO₄ dans ces conditions.

### Exemple 5' : comportement électrochimique de l'échantillon de triphylite carbonée préparé à l'exemple 5.

Le matériau préparé à l'exemple 5 a été testé dans des piles boutons du type CR 2032 décrites dans l'exemple 1".

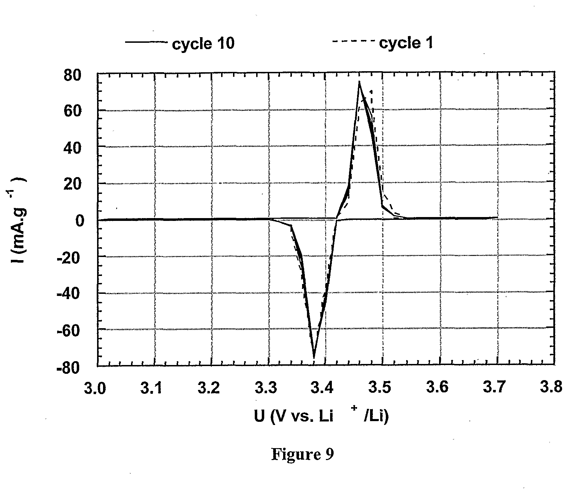

La figure 9 présente le cycle 1 et 10 obtenu par voltammétrie lente (20 mV.h⁻¹) contrôlée par un cycleur de batterie de type Macpile®. Les deux cycles sont superposés, ce qui indique une bonne cyclabilité. La capacité initiale de cet échantillon est 92 % de la capacité théorique. Cette capacité se maintient au cyclage. Bien qu'elle conduise à des échantillons de LiFePO₄ performants, la synthèse enseignée dans l'exemple 5 et relativement contraignante malgré sa simplicité au niveau du laboratoire. En effet, seul l'acétate de cellulose et, en fin de synthèse, le carbone résiduel peuvent tamponner l'atmosphère. Il est donc primordial de travailler avec des gaz neutres purifiés de toute trace d'eau et d'oxygène, ce qui est difficile à pratiquer au niveau industriel. Une variation de la pureté des gaz ou un manque d'étanchéité du four se traduira par l'obtention d'un produit oxydé.

### Exemple : 6 Préparation d'un phosphosulfate de fer de structure Nasicon :

Dans un flacon en polypropylène de 500 ml sont ajoutés 9,4 g de phosphate de fer trivalent FePO₄,2H₂O, 7 g de sulfate de fer trivalent 4,4 g d'oxalate complexe d'ammonium et de titane (NH₄)₂TiO(C₂O₄)₂, 6,2g de sulfate d'ammonium et 8,9 g d'acétate de lithium, 1,7 g de sucrose et 250ml de méthyléthylcétone. Le mélange est mis à broyer sur des rouleaux en caoutchouc en présence de cylindres d'alumine (Φ = 10 mm, H = 10mm) pendant 48 heures. La suspension est mise a sécher et la poudre est re-broyée dans un mortier. La poudre obtenue est traitée à 400°sous air pendant 2 heures. Après refroidissement, le résidu de calcination est traité à 670 °C pendant une heure dans un four tubulaire sous atmosphère d'ammoniac dans de l'argon (5%), la montée en température étant de 5 °C par minute. Le balayage de gaz est maintenu au cours du refroidissement.
Le produit gris-noir obtenu a pour formule Li_{1,35}Fe_{0.85}Ti_{0.15}SP₀₅O₆ et contient 1,3% de carbone conducteur. Le matériau testé en tant qu'électrode dans les condition de l'exemple 1' a une capacité de 115 mAh dans la gamme de voltage 3,6 - 2,5 V.

### Exemple 7 : - Synthèse à partir d'un phosphate de fer non commercial préparé à partir de fer métallique

Dans cet exemple, LiFePO₄ carboné a été synthétisé en partant d'un phosphate de fer non commercial et obtenu par l'action de l'acide phosphorique sur le fer métallique. La poudre de fer (325 mesh) a été mélangée à la quantité stoechiométrique d'une solution aqueuse préparée à partir d'une solution commerciale d'acide phosphorique 85 %. Le mélange a été maintenu sous agitation une nuit à température ambiante. Un barbotage d'oxygène permet d'oxyder le fer II passant en solution en fer III qui précipite avec l'ion phosphate. Après une nuit, la solution ne contient plus de fer métallique mais une poudre légèrement grise. Les solutions de fer II étant très sensibles à l'oxydation, la majorité du fer se trouve à l'état d'oxydation III. Dans certains cas, après dissolution du fer métallique sous barbotage d'oxygène, une oxydation supplémentaire a été réalisée par le peroxyde d'hydrogène pour s'assurer que tout le fer est à l'état d'oxydation III. La poudre en solution est dans ce cas légèrement jaune dû à des traces de peroxo complexes.

La quantité de lithium stoechiométrique calculée à partir de la quantité de fer métallique initiale a été ajouté sous forme de carbonate de lithium, ainsi que la source de carbone (alcohol polyvinylique hydrolysé à 87 % : 20% en poids par rapport au poids de fer initial), directement dans le mélange solution + poudre. Le broyage est réalisé dans ce milieu. Après évaporation de la solution aqueuse, les mélanges ont été soumis au traitement thermique décrit dans l'exemple 2.

Les produits obtenus contiennent 1.1 % en carbone (déterminé par analyse élémentaire). Leur conductivité électronique mesurée comme décrit dans l'exemple 1' est de 2.10⁻³ S.cm⁻¹. Leur comportement électrochimique correspond à LiFePO₄ carboné. 90% de la capacité théorique est échangée de façon réversible au cour du cyclage.

### Exemple 8 : - Synthèse à partir d'un phosphate de fer non commercial préparé à partir de Fe₂O₃

Dans cet exemple, LiFePO₄ carboné a été synthétisé en partant d'un phosphate de fer non commercial et obtenu par l'action de l'acide phosphorique sur l'oxyde de fer Fe₂O₃. La poudre de Fe₂O₃ (<5 microns) a été mélangée à la quantité stoechiométrique d'une solution aqueuse préparée à partir d'une solution commerciale d'acide phosphorique 85 %. Le mélange a été maintenu sous agitation une nuit au reflux. Après une nuit, le mélange contient une poudre rose pâle. Comme précédemment, la quantité requise de carbonate de lithium ainsi que de la source de carbone (alcohol polyvinylique hydrolysé à 87 % : 15% en poids par rapport au poids de Fe₂O₃ initial), a été ajoutée directement à la solution contenant la poudre de phosphate de fer synthétisée. Après broyage, la solution aqueuse est évaporée. Le mélange est séché avant d'être soumis au traitement thermique décrit dans l'exemple 2.
Les produits obtenus contiennent 0.7 % en carbone (déterminé par analyse élémentaire). Leur conductivité électronique mesurée comme décrit dans l'exemple 1' est de 2.10⁻⁵ S.cm⁻¹. Leur comportement électrochimique correspond à LiFePO₄ carboné. 85% de la capacité théorique est échangée de façon réversible au cour du cyclage.

### Exemple 9: Synthèse de LiFePO₄ carboné à partir de l'oxyde de fer FeOOH

LiFePO₄ carboné a été synthétisé par décomposition thermique de FeOOH (catalyst grade, 30 à 50 mesh) et LiH₂PO₄ en présence d'hydrogène (8% dans l'argon). Dans un premier temps, les quantités stoechiométriques des deux composés ainsi que la source de carbone (sucrose, 15% en poids par rapport au poids de FeOOH initial). sont broyés ensemble dans l'iso-propanol. Le solvant est évaporé et le mélange soumis au traitement thermique décrit dans l'exemple 2.
L'échantillon résultant contient 0.8% de carbone.. Sa conductivité électronique mesurée comme décrit dans l'exemple 1' est de 6.10⁻⁵ S.cm⁻¹. Son comportement électrochimique correspond à LiFePO₄ carboné. 92% de la capacité théorique est échangée de façon réversible au cours du cyclage.

### Exemple 10: - préparation de LiFe_{0.5}Mn_{0.5}PO₄ sous atmosphère réductrice.

LiFe_{0.5}Mn_{0.5}PO₄ a été préparé en mélangeant les quantités stoechiométriques de LiH₂PO₄, FeC₂O₄.2H₂O et (CH₃COO)₂Mn.4H₂O. Ces composés sont broyés dans l'heptane. Après séchage le mélange est chauffé progressivement jusqu'à 400°C sous air pour décomposer les groupements acétates et oxalates. Cette température est maintenue pendant 8 heures. Au cours de ce traitement, le fer II s'oxyde en fer III. Le mélange est ensuite rebroyé dans une solution d'acétone contenant le précurseur de carbone (acétate de cellulose 39.7% en poids de groupements acétyls) 5 % en poids par rapport au mélange). Après séchage, le mélange est traité thermiquement sous un balayage de CO/CO₂ 1/1 suivant le protocol décrit à l'exemple 3.
Le composé final contient 0.8 % en carbone. Sa conductivité électronique est 5.10⁻⁴ S.cm⁻¹.

### Exemple 10': - performances d'une batterie contenant l'échantillon préparé à l'exemple 10

Le comportement électrochimique de l'échantillon LiFe_{0.5}Mn_{0.5}PO₄ a été évalué à température ambiante en batterie lithium contenant un électrolyte liquide.
Les cathodes sont constituées d'un mélange de matière active, de noir de carbone, et d'un agent liant (PVDF en solution dans la N-méthyl pyrolidone) dans les proportions 85:5:10. La composite est étendue sur un collecteur de courant en aluminium. Après séchage, des électrodes de 1,3 cm² et d'une capacité d'environ 1,6 mAh sont découpées à l'emporte-pièce. Les batteries sont assemblées en boîte à gants, sous atmosphère inerte.

Les mesures ont été réalisées dans un électrolyte contenant LiClO₄ 1M dans un mélange EC : DMC 1 : 1. L'anode est constituée de lithium. Les tests sont réalisés à température ambiante.

La Figure 8 présente les courbes de charge et de décharge d'une batterie cyclée en mode galvanostatique entre 3 et 4.3 Volts. Les régimes de charge et de décharge imposés correspodent à C/24 (la batterie est chargée en 24 heures puis déchargée pendant la même durée)
La courbe de décharge possède deux plateaux : le premier vers 4V correspond à la réduction du Manganèse III en manganèse II, et le deuxième vers 3.4 V correspond à la réduction du fer III en fer II. La capacité spécifique obtenu durant la décharge est 157 mAh.g⁻¹, ce qui correspond à 92% de la capacité théorique.

La réduction s'effectue en présence d'hydrogène (8% dans l'argon)

## Revendications

1. Procédé de synthèse de composés de formule LiₓM_{1-y}M'_{y}(XO₄)ₙ dans laquelle x, y et n sont des nombres tels que 0 ≤ x ≤ 2, 0 ≤ y ≤ 0,6 et 1 ≤ n ≤ 1,5, M est un métal de transition ou un mélange de métaux de transition de la première ligne du tableau périodique, M' est un élément de valence fixe choisi parmi Mg²⁺, Ca²⁺; Al³⁺, Zn²⁺ ou une combinaison de ces mêmes éléments et X est choisi parmi S, P et Si,
par mise en équilibre dans les proportions requises d'un mélange comprenant au moins:
a) une source de M, une partie au moins du ou desdits métaux de transition qui composent M se trouvant dans un état d'oxydation supérieur à celui du métal dans le composé final LiₓM_{1-y}M'_{y}(XO₄)ₙ ;
b) une source d'un élément M' ;
c) un composé source de lithium ; et
d) un composé source de X,
les sources des éléments M, M', Li et X pouvant être introduites, en tout ou en partie, sous forme de composés comportant plus d'un élément source, et
la synthèse se faisant par réaction et mise en équilibre du mélange intime et/ou homogène, dans les proportions requises des précurseurs a) à d), et par réduction de manière à amener le ou les métaux de transition au degré de valence voulu.

2. Procédé de synthèse de selon la revendication 1, dans lequel la réduction du mélange des précurseurs a) à d) est réalisée avec une atmosphère gazeuse réductrice.

3. Procédé de synthèse selon la revendication 1 ou 2, dans lequel la source de M est également source de X et/ou la source de M' est également source de X et/ou la source de lithium est également source de X et/ou la source de X est également source de lithium.

4. Procédé de synthèse selon l'une quelconque des revendications 1 à 3, dans lequel la mise en équilibre du mélange de précurseurs a) à d) est faite sous forme de mélange intime et/ou homogène.

5. Procédé de synthèse selon l'une quelconque des revendication 1 à 4, dans lequel le ou les métaux de transition est (sont) choisi(s) au moins en partie dans le groupe constitué par le fer, le manganèse, le cobalt et le nickel, le complément des métaux de transition étant choisi dans le groupe constitué par le vanadium, le titane, le chrome et le cuivre.

6. Procédé de synthèse selon la revendication 5 dans lequel l'élément M dans le composé source de M est dans un état d'oxydation de 3 à 7.

7. Procédé de synthèse selon la revendication 5, dans lequel le composé source de M est l'oxyde de fer III ou la magnétite, le dioxide de manganèse, le pentoxyde de di-vanadium, le phosphate de fer trivalent, le nitrate de fer trivalent, le sulfate de fer trivalent, l'hydroxyphosphate de fer et de lithium, le sulfate ou le nitrate de fer trivalent, ou un mélange de ces derniers.

8. Procédé de synthèse selon l'une quelconque des revendications 1 à 7, dans lequel le composé source de lithium est choisi dans le groupe constitué par l'oxyde ou l'hydroxyde de lithium, le carbonate de lithium, le phosphate neutre Li₃PO₄, le phosphate acide LiH₂PO₄, l'ortho, le méta ou les polysilicates de lithium, le sulfate de lithium, l'oxalate de lithium et l'acétate de lithium, ou un mélange de ces derniers.

9. Procédé de synthèse selon la revendication 8, dans lequel le composé source de lithium est le carbonate de lithium de formule Li₂CO₃.

10. Procédé de synthèse selon l'une quelconque des revendications 1 à 9, dans lequel la source de X est choisie dans le groupe constitué par l'acide sulfurique, le sulfate de lithium, l'acide phosphorique et ses esters, le phosphate neutre Li₃PO₄ ou le phosphate acide LiH₂P0₄, les phosphates mono- ou di-ammoniques, le phosphate de fer trivalent, le phosphate de manganèse et d'ammonium (NH₄MnPO₄), la silice, les silicates de lithium, les alcoxysilanes et leurs produits d'hydrolyse partielle et les mélanges de ces derniers.

11. Procédé de synthèse selon la revendication 10, dans lequel le composé précurseur de X est le phosphate de fer, de préférence le phosphate de fer (III), anhydre ou hydraté.

12. Procédé selon l'une quelconque des revendications 1 à 11, dans lequel au moins un des dérivés du lithium obtenu est de formule LiFePO₄, LiFe₁₋ₛMnₛPO₄ avec 0 ≤ s ≤ 0,9, LiFe_{1-y}Mg_{y}PO₄ et LiFe_{1-y}Ca_{y}PO₄ avec 0 ≤ y ≤ 0,3, LiFe_{1-s-y}MnₛMg_{y}PO₄ avec 0 ≤ s ≤ 1 et 0 ≤ y ≤ 0,2, Li₁₊ₓFeP₁₋ₓSiₓO₄ avec 0 ≤ x ≤ 0,9, Li₁₊ₓFe₁₋ₛMnₛP_{1-z}Si_{z}O avec 0 ≤ s ≤ 1, Li_{1+z}Fe_{1-s-z}MnₛP_{1-z}S_{z}O₄ avec 0 0 ≤ s ≤ 1, 0 ≤ z 0 ≤ 0,2, Li_{1+2q}Fe_{1-s-q}MnₛPO₄ avec 0 ≤ s ≤ 1, et 0 ≤ q ≤ 0,3, et avec Li₁₊ᵣFe₁₋ₛMnₛ(S₁₋ᵣPᵣO₄)_{1,5} et avec 0≤u≤1,5.

13. Procédé de synthèse selon l'une quelconque des revendications 1 à 12, dans lequel les composés de formule LiₓM_{1-y}M'_{y}(XO₄)ₙ ont une structure olivine ou Nasicon, incluant la forme monoclinique.

14. Procédé de synthèse selon l'une quelconque des revendications 1 à 13, dans lequel la réduction est obtenue par l'action d'une atmosphère réductrice choisie de façon à pouvoir réduire l'état d'oxydation de l'ion métallique M au niveau requis pour la constitution du composé sans toutefois le réduire à l'état métallique neutre.

15. Procédé de synthèse selon la revendication 14, dans lequel l'atmosphère réductrice contient de l'hydrogène ou un gaz capable de générer de l'hydrogène dans les conditions de la synthèse, de l'ammoniac ou une substance capable de générer de l'ammoniac dans les conditions de la synthèse ou du monoxyde de carbone, ces gaz étant utilisés purs ou en mélanges et pouvant également être utilisés en présence de vapeur d'eau et/ou en présence de dioxyde de carbone et/ou en présence d'un gaz neutre.

16. Procédé de synthèse selon la revendication 15, dans lequel l'atmosphère réductrice est constituée par un mélange CO/CO₂ ou H₂/H₂O, NH₃/H₂O ou leur mélange, générant une pression d'équilibre d'oxygène inférieure ou égale à celle déterminée par le métal de transition au degré d'oxydation correspondant aux précurseurs introduits pour former le composé LiₓM_{1-y}M'_{y}(XO₄)ₙ, mais supérieure à celle correspondant à la réduction d'un quelconque des éléments de transition présent à l'état métallique, assurant la stabilité thermodynamique de LiₓM_{1-y}M'_{y}(XO₄)ₙ dans le mélange réactionnel, indépendamment du temps de réaction de la synthèse.

17. Procédé de synthèse selon la revendication 15, dans lequel l'atmosphère réductrice est constituée par un mélange CO/CO₂, H₂/H₂O₂, NH₃/H₂O ou leur mélange, générant une pression d'équilibre d'oxygène inférieure ou égale à celle déterminée par un des métaux de transition présent dans LiₓM_{1-y}M'_{y}(XO₄)ₙ, pouvant éventuellement conduire à la réduction d'au moins cet élément de transition à l'état métallique, l'obtention du composé LiₓM_{1-y}M'_{y}(XO₄)ₙ, étant réalisée par le contrôle de la température et du temps de contact avec la phase gazeuse, la température de synthèse étant préférentiellement comprise entre 200 et 1.200°C, plus préférentiellement encore entre 500 et 800°C, et le temps de contact du mélange réactionnel avec la phase gazeuse étant préférentiellement compris entre 2 minutes et 5 heures et plus préférentiellement encore entre 10 et 60 minutes.

18. Procédé selon la revendication 16 ou 17, dans lequel l'atmosphère gazeuse réductrice est obtenue par décomposition sous vide ou sous atmosphère inerte, d'un composé organique ou d'un mélange de composé organiques contenant, liés chimiquement, au moins de l'hydrogène et de l'oxygène, et dont la pyrolyse génère du monoxyde de carbone et / ou un mélange de dioxyde et de monoxyde de carbone, de l'hydrogène et / ou un mélange hydrogène et vapeur d'eau susceptibles d'effectuer la réduction amenant à la formation du composé LiₓM_{1-y}M'_{y}(XO₄)ₙ.

19. Procédé de synthèse selon la revendication 16 ou 17, dans lequel l'atmosphère gazeuse réductrice est obtenue par oxydation partielle par l'oxygène ou par l'air, d'un hydrocarbure et/ou de carbone appelé carbone sacrificiel, éventuellement en présence de vapeur d'eau, à une température comprise entre 400 et 1.200 C permettant la formation de monoxyde de carbone ou d'hydrogène ou d'un mélange de monoxyde de carbone et d'hydrogène.

20. Procédé de synthèse selon la revendication 19, dans lequel le carbone sacrificiel est choisi dans le groupe constitué par le graphite naturel ou artificiel, le noir de carbone ou le noir d'acétylène et les cokes, en particulier les cokes de pétrole, le carbone sacrificiel étant sous forme de particules d'une taille de préférence inférieure à 15 micromètres.

21. Procédé de synthèse selon la revendication 18 ou 19, dans lequel la quantité de carbone sacrificiel est inférieure ou sensiblement égale à la quantité requise pour réduire le mélange réactionnel sans laisser de carbone sacrificiel résiduel, cette quantité est de préférence d'un atome de carbone pour se combiner à un atome d'oxygène à des températures supérieures à 750°C et elle est de préférence de un atome pour se combiner à 2 atomes d'oxygène pour des températures inférieures à 750°C.

22. Procédé de synthèse selon la revendication 18 ou 19, dans lequel la quantité de carbone sacrificiel est égale, mole pour mole à la moitié de la quantité d'oxygène nécessaire à enlever du mélange de composés précurseurs pour obtenir le matériau LiₓM_{1-y}M'_{y}(XO₄)ₙ par réduction, lorsque la réaction est réalisée au dessous de 710 C et égale, mole pour mole à cette quantité, lorsque la réaction est réalisée en dessous de cette température.

23. Procédé de synthèse d'un matériau constitué de particules, les dites particules comportant un noyau et un enrobage et/ou étant connectées entre elles par un pontage, le dit noyau comprenant au moins un composé de formule LiₓM_{1-y}M'_{y}(XO₄)ₙ, dans laquelle x, y et n sont des nombres tels que 0 ≤ x ≤ 2, 0 ≤ y ≤ 0,6 et 1 ≤ n ≤ 1,5, M est un métal de transition ou un mélange de métaux de transition de la première ligne du tableau périodique, M'est un élément de valence fixe choisi parmi Mg²⁺,
Ca²⁺, Al³⁺, Zn²⁺ et X est choisi parmi S, P et Si, ledit enrobage étant constitué par du carbone reliant au moins deux particules entre elles, et ledit pontage étant constitué par du carbone reliant au moins deux particules entre elles,
le dit procédé comportant la mise en équilibre dans les proportions requises d'un mélange intime et/ou homogène comprenant au moins :
a) une source de M, une partie au moins du ou desdits métaux de transition qui composent M se trouvant dans un état d'oxydation supérieur à celui du métal dans le composé final LiₓM_{1-y}M'_{y}(XO₄)ₙ;
b) une source d'un élément M';
c) un composé source de lithium; et
d) un composé source de X;
les sources des éléments M, M', Li et X pouvant être introduites, en tout ou en partie, sous forme de composés comportant plus d'un élément source, et
la synthèse se faisant par réaction et mise en équilibre du mélange dans les proportions requises des précurseurs a) à d), avec une atmosphère gazeuse réductrice, de manière à amener le, ou les métaux de transition au degré de valence voulu,
la synthèse se faisant en présence d'une source de carbone appelée carbone conducteur,
la synthèse conduisant alors, par une étape de pyrolyse du composé source du carbone, conduite après ou, simultanément aux étapes de préparation du mélange des précurseurs et de réduction du mélange obtenu, au dit matériau.

24. Procédé de synthèse selon la revendication 23, dans lequel le carbone présent dans le matériau sous forme d'enrobage et ou de pontage, est intimement adhérent aux particules du matériau et confère à ce dernier une conductivité électronique supérieure à celle du matériau constitué des particules correspondantes non enrobées.

25. Procédé selon la revendication 23 ou 24, **caractérisé en ce que** l'ajout de carbone conducteur est effectué postérieurement à la synthèse de LiₓM_{1-y}M'_{y}(XO₄)ₙ.

26. Procédé selon la revendication 23 **caractérisé en ce que** l'ajout de carbone conducteur est effectué simultanément à la synthèse de LiₓM_{1-y}M'_{y}(XO₄)ₙ.

27. Procédé de synthèse selon l'une quelconque des revendications 23 à 26, dans lequel les paramètres réactionnels sont choisis, en particulier la cinétique de la réduction par la phase gazeuse, de façon à ce que le carbone conducteur ne participe pas d'une manière significative au processus de réduction.

28. Procédé de synthèse selon la revendication 27, dans lequel les paramètres réactionnels tels que le flux et la composition de la phase gazeuse, la température et le temps de contact sont choisis de façon à ce que le carbone conducteur ne participe pas d'une manière significative au processus de réduction, c'est à dire que le processus réduction est le fait de la phase gazeuse, et en particulier de manière à ce que la température réactionnelle soit de préférence inférieure à 900°C, et le temps de réaction inférieure à 5 heures, d'une manière encore plus privilégiée de manière à ce que la température réactionnelle soit en dessous de 800°C et/ou pour des temps inférieurs à 1 heure.

29. Procédé de synthèse selon la revendication 1 ou 23, dans laquelle la valeur de x dans LiₓM_{1-y}M'_{y}(XO₄)ₙ est choisie de manière à assurer un contrôle thermodynamique et/ou une cinétique rapide de la réduction, en permettant de sélectionner des atmosphères réductrices gazeuse facilement accessibles par simple mélange de gaz ou par reformage de molécule organiques simples.

30. Procédé de synthèse selon l'une quelconque des revendications 23 à 29, dans lequel la substance organique source de carbone conducteur est sélectionnée de façon à ce que les particules du matériau obtenu après l'étape de pyrolyse possèdent sensiblement la forme et la distribution granulométrique des précurseurs de la réaction de synthèse.

31. Procédé de synthèse selon l'une quelconque des revendications 23 à 30, dans lequel la substance organique source de carbone conducteur est sélectionnée dans le groupe constitué par les polymères et oligomères contenant un squelette carboné, les hydrates de carbone simples ou polymères et les hydrocarbures aromatiques.

32. Procédé de synthèse selon la revendication 31, dans lequel la substance organique source de carbone conducteur est choisie de façon à laisser un dépôt de carbone conducteur en surface c.a.d. enrobage des particules solides constitutives du matériau et/ou, entre ces particules solides, des ponts de carbone c.a.d. pontage, lors de la pyrolyse.

33. Procédé de synthèse selon l'une quelconque des revendications 23 à 32, dans lequel la source de carbone conducteur contient, dans un même composé ou dans le mélange qui constitue cette source, de l'oxygène et de l'hydrogène liés chimiquement et dont la pyrolyse libère localement de l'oxyde de carbone et / ou du dioxyde de carbone et/ou de l'hydrogène et de la vapeur d'eau contribuant, outre le dépôt de carbone, à créer localement l'atmosphère réductrice requise pour la synthèse du matériau LiₓM_{1-y}M'_{y}(XO₄)ₙ.

34. Procédé de synthèse selon la revendication 32 ou 33, dans lequel la substance organique source de carbone conducteur est au moins un des composés du groupe constitué par le polyéthylène, le polypropylène, le glucose, le fructose, le sucrose, le xylose, le sorbose, l'amidon, la cellulose et ses esters, les polymères blocs d'éthylène et d'oxyde d'éthylène et les polymères de l'alcool furfurylique.

35. Procédé de synthèse selon l'une quelconque des revendications 23 à 34, dans lequel la source de carbone conducteur est ajoutée au début ou au cours de l'étape de mélange des précurseurs de la réaction a) à d) tels que définis dans la revendication 1.

36. Procédé de synthèse selon la revendication 35, dans lequel la teneur en substance source de carbone conducteur, présent dans le milieu réactionnel soumis à réduction, est choisie de façon à ce que la teneur en carbone conducteur dans le milieu réactionnel soit préférentiellement, bornes comprises, entre 0,1 et 25 %.

37. Procédé selon l'une quelconque des revendications 1 à 36, dans lequel le traitement thermique qui inclut la réaction de formation de LiₓM_{1-y}M'_{y}(XO₄)ₙ et la réduction et la pyrolyse est réalisé par chauffage depuis la température ordinaire jusqu'à une température comprise entre 500 et 1.100 C.

38. Procédé de synthèse selon la revendication 37, dans lequel la température maximale atteinte est comprise entre 500 et 800°C.

39. Procédé de synthèse selon l'une quelconque des revendications 1 à 38, dans lequel la température et la durée de la synthèse sont choisis en fonction de la nature du métal de transition, c'est-à-dire au-dessus d'une température minimum à laquelle l'atmosphère réactive est capable de réduire le ou les éléments de transition à leur état d'oxydation requis dans le composé LiₓM_{1-y}M'_{y}(XO₄)ₙ et en dessous d'une température ou d'un temps amenant une réduction du ou des éléments de transition à l'état métallique ou une oxydation du carbone résultant de la pyrolyse de la substance organique.

40. Procédé de synthèse selon la revendication 39, dans lequel le composé LiₓM_{1-y}M'_{y}(XO₄)ₙ est le LiMPO₄ et dans lequel le taux de carbone conducteur après pyrolyse est compris entre 0,1 et 10 % en masse par rapport à la masse du composé LiMPO₄.

41. Procédé de synthèse selon l'une quelconque des revendications 23 à 40, dans lequel le composé source de carbone est facilement dispersable lors du traitement utilisé pour assurer un mélange intime des précurseurs a) à d) par agitation et/ou par broyage mécanique et/ou par homogénéisation ultrasonore, en présence ou non d'un liquide, ou par spay-drying d'une solution d'un ou de plusieurs précurseurs et/ou d'une suspension et/ou d'une émulsion.

42. Procédé de synthèse selon l'une quelconque des revendications 23 à 41, comportant les deux étapes :
i) de broyage intime sec ou dans un solvant des composés sources, y compris du carbone conducteur, et séchage, le cas échéant; et
ii) de traitement thermique sous balayage d'une atmosphère réductrice contrôlée.

43. Procédé de synthèse selon l'une quelconque des revendications 23 à 42, **caractérisé en ce que** le matériau obtenu possède une conductivité, mesurée sur un échantillon de poudre compactée à 100 Kg.cm⁻², qui est supérieure à 10⁻⁸S.cm⁻¹.

44. Procédé de synthèse selon l'une quelconque des revendications 1 à 22, dans lequelle composé obtenu a la formule LiFePO₄.

45. Procédé de synthèse selon l'une quelconque des revendications 23 à 44, dans lequel le noyau des particules du matériau obtenu est pour au moins 95 % constitué d'un composé de formule LiₓM_{1-y}M'_{y}(XO₄)ₙ (de préférence de formule LiFePO₄) et la teneur en carbone conducteur de l'enrobage et/ou du pontage, dans le matériau obtenu, est préférentiellement, bornes comprises, entre 0,2 et 5 %, par rapport à la masse de matériau obtenu lors de la synthèse.

46. Procédé de synthèse selon la revendication 44 ou 45, dans lequel le composé source de fer est choisi au moins partiellement dans le groupe constitué par les phosphates de fer, les oxy- ou hydroxyphosphates de fer, les oxydes de fer les oxy- ou hydroxyphosphates de fer et les oxydes de fer et de lithium, dans lesquels au moins une partie du fer est à l'état d'oxydation III, ainsi que les mélanges de ces derniers.

47. Procédé de synthèse selon l'une quelconque des revendications 44 à 46, dans lequel le composé source de lithium est le phosphate de lithium, le dihydrogénophosphate de lithium, le carbonate de lithium, l'acétate de lithium, ou l'hydroxyde de lithium, ainsi que les mélanges de ces derniers.

48. Procédé de synthèse selon l'une quelconque des revendications 44 à 47, dans lequel le composé source de phosphore est un phosphate d'ammonium, de. l'acide ortho-, méta- ou pyro-phosphorique, ou du pentoxyde de phosphore.

49. Procédé de synthèse selon l'une quelconque des revendications 1 à 48, dans lequel l'étape de réduction est réalisée dans le réacteur servant ou ayant servi pour la préparation du mélange des précurseurs ou dans un réacteur différent.

50. Matériau sous forme de particules comportant un noyau et un enrobage de carbone autour du noyau et/ou un pontage de carbone entre les particules, le dit noyau comprenant au moins un composé de formule LiₓM_{1-y}M'_{y}(XO₄)ₙ, dans laquelle x, y et n sont des nombres tels que 0 ≤ x ≤ 2, 0 ≤ y ≤ 0;6, et 1 ≤ n ≤ 1,5, M est un métal de transition ou un mélange de métaux de transition de la première ligne du tableau périodique, M' est un élément de valence fixe choisi parmi Mg²⁺, Ca²⁺; Al³⁺, Zn²⁺ et X est choisi parmi S, P et Si, ledit matériau ayant une conductivité mesurée sur un échantillon de poudre compactée à une pression supérieure ou égale à 3000Kg.cm⁻² , qui est supérieure à 10⁻⁸ Scm⁻¹.

51. Matériau susceptible d'être obtenu par un procédé selon l'une quelconque des revendications 23 à 49, comportant un noyau et un enrobage et/ou un pontage, ledit matériau présentant une teneur totale en carbone comprise entre 0,1 et 0,2 %, bornes comprises, et de préférence qui est supérieure à 0,1 % de la masse totale du matériau.

52. Matériau sous forme de particules selon la revendication 50, comportant un noyau et un enrobage de carbone autours du noyau et/ou un pontage de carbone entre les particules, le dit noyau comprenant au moins un composé de formule LiₓM_{1-y}M'_{y}(XO₄)ₙ, dans laquelle x, y et n sont des nombres tels que 0 ≤ x ≤ 2, 0≤ y ≤ 0,6, et 1 ≤ n ≤ 1,5, M est un métal de transition ou un mélange de métaux de transition de la première ligne du tableau périodique, M'est un élément de valence fixe choisi parmi Mg²⁺, Ca²⁺; Al³⁺, Zn²⁺ et X est choisi parmi S, P et Si, ledit matériau ayant une conductivité mesurée sur un échantillon de poudre compactée à une pression supérieure à 3000Kg.cm⁻² de préférence de 7350 Kg.cm⁻², qui est supérieure à 10⁻⁸ Scm⁻¹ et ayant une teneur totale en carbone supérieure à 0,3 % de la masse totale du matériau.

53. Cellule électrochimique comprenant au moins deux électrodes et au moins un électrolyte, **caractérisée en ce qu'**au moins une de ses électrodes comprend au moins un matériau selon l'une quelconque des revendications 50 à 52.

54. Cellule selon la revendication 53, **caractérisée en ce que** l'électrolyte est un polymère, solvatant ou non, optionnellement plastifié ou gélifié par un liquide polaire contenant en solution un ou plusieurs sels métalliques.

55. Cellule selon la revendication 53, **caractérisée en ce que** l'électrolyte est un liquide polaire immobilisé dans un séparateur microporeux et contenant en solution un ou plusieurs sels métalliques.

56. Cellule selon la revendication 55, dans laquelle au moins un des sels métalliques est un sel de lithium.

57. Cellule selon l'une quelconque des revendications 53 à 56, **caractérisée en ce qu'**au moins une des électrodes négatives est du lithium métallique, un alliage de lithium, notamment avec l'aluminium, l'antimoine, le zinc, l'étain, éventuellement en mélange nanométrique avec de l'oxyde de lithium, ou un composé d'insertion du carbone, notamment du graphite, un nitrure double de lithium et de fer, de cobalt ou de manganèse, un titanate de lithium de formule LiₓTi_{(5+3y})_{/4}O₄, avec 1 ≤ x ≤ (11-3y)/4 et avec 0 ≤ y ≤ 1.

58. Cellule selon l'une quelconque des revendications 53 à 57, **caractérisé en ce qu'**au moins une des électrodes positives contient un des produits susceptibles d'être obtenu par un procédé selon l'une quelconque des revendications 1 à 49, utilisé seul ou en mélange avec un oxyde double de cobalt et le lithium, ou un avec un oxyde complexe de formule LiₓNi_{1-y-z-q-r}Co_{y}Mg_{z}AlᵣO₂ avec 0,05 ≤ x ≤ 1, 0 ≤ y, z et r ≤ 0.3, ou avec un oxyde complexe de formule LiₓMni_{1-y-z-q-r}Co_{y}Mg_{z}AlᵣO_{2-q}F avec 0,05 ≤ x ≤ 1 et 0 ≤ y, z, r, q ≤ 0,3.

59. Cellule selon l'une quelconque des revendications 53 à 58, **caractérisée en ce que** le polymère utilisé pour lier les électrodes ou comme électrolytes est un polyéther, un polyester, un polymère basé sur les unités méthacrylate de méthyle, un polymère à base d'acrylonitrile, et/ou un fluorure de vinylidène, ou un mélange de ces derniers.

60. Cellule selon l'une quelconque des revendications 53 à 59, **caractérisée en ce que** la cellule comporte un solvant non protogénique qui comprend de préférence du carbonate d'éthylène ou de propylène, un carbonate d'un alkyle ayant de 1 à 4 atomes de carbone, de la γ-butyrolactone, une tétraalkylsufamide, un α-*ω* dialkyléther d'un mono-, di-, tri-, tetra- or oligo- éthylene glycol de poids moléculaire inférieur ou égal à 5000, ainsi que les mélange des solvants susnommés.

61. Cellule selon l'une quelconque des revendications 53 à 60, **caractérisée en ce qu'**elle fonctionne comme générateur primaire ou secondaire, comme super-capacité ou comme système de modulation de la lumière.

62. Cellule électrochimique selon l'une quelconque des revendications 53 à 61, **caractérisé en ce que** qu'elle fonctionne comme super capacité, **caractérisé en ce que** le matériau de l'électrode positive est un matériau selon les revendications 50 à 52, et l'électrode négative un carbone de surface spécifique supérieure à 50 m².g⁻¹ sous forme de poudre, de fibre ou de composite mésoporeux de type composite carbone-carbone.

63. Cellule électrochimique selon l'une quelconque des revendications 53 à 62, **caractérisée en ce que** qu'elle fonctionne comme système de modulation de la lumière et **en ce que** la contre-électrode optiquement inactive est un matériau selon les revendications 50 à 52 épandu en couche mince sur un support transparent conducteur, de type verre ou polymère recouvert d'un oxyde d'étain dopé de formule SnO₂ : Sb ou SnO₂ :F ou d'un oxyde d'indium dopé de formule In₂O₃ : Sn.

## Patentansprüche

1. Verfahren zur Synthese von Verbindungen der Formel LiₓM_{1-y}M'_{y}(XO₄)ₙ, in welcher x, y und n so ausgewählt sind, dass 0≤x≤2, 0≤y≤0,6 und 0≤n≤1,5 sind, M ist ein Übergangsmetall oder eine Mischung von Übergangsmetallen der ersten Reihe des Periodensystems; M' ist ein Element mit definierter Valenz ausgewählt aus Mg²⁺, Ca²⁺, Al³⁺, Zn²⁺ oder eine Kombination dieser Elemente, und X ist ausgewählt aus S, P und Si,
im Gleichgewicht gesetzt in den erforderlichen Verhältnissen einer Mischung, die zumindest umfasst:
a) eine Quelle für M, wobei ein Teil des oder der Übergangsmetalle, die M umfassen, sich in einer Oxidationsstufe über derjenigen des Metalls in der finalen Zusammensetzung LiₓM_{1-y}M'_{y}(XO₄)ₙ befinden;
b) eine Quelle eines Elements M';
c) eine Verbindungsquelle von Lithium;
d) eine Verbindungsquelle von X;
die Quellen der Elemente M, M', Li und X können teilweise oder vollständig in Form von Verbindungen, die mehr als ein Element umfassen, eingeführt werden,
und
die Synthese wird durchgeführt durch Reaktion und ins Gleichgewicht Setzen der innigen und/oder homogenen Mischung in den erforderlichen Verhältnissen der Vorstufen a) bis d), und durch Reduktion auf eine Weise, die das oder die Übergangsmetalle auf den gewünschten Valenzgrad bringen.

2. Syntheseverfahren nach Anspruch 1, wobei die Reduktion der Mischung der Vorstufen a) bis d) mit einer gasförmigen, reduktiven Atmosphäre durchgeführt ist.

3. Syntheseverfahren nach Anspruch 1 oder 2, wobei die Quelle von M auch Quelle von X ist und/oder die Quelle von M' auch Quelle von X ist und/oder die Quelle von Lithium auch Quelle von X ist und/oder die Quelle von X auch Quelle von Lithium ist.

4. Syntheseverfahren nach einem der Ansprüche 1 bis 3, wobei das ins Gleichgewicht Setzen der Mischung der Vorstufen a) bis d) in Form einer innigen und/oder homogenen Mischung durchgeführt ist.

5. Syntheseverfahren nach einem der Ansprüche 1 bis 4, wobei das oder die Übergangsmetalle zumindest teilweise ausgewählt ist (sind) aus der Gruppe bestehend aus Eisen, Mangan, Kobalt und Nickel, und die Ergänzung der Übergangsmetalle ausgewählt ist aus der Gruppe bestehend aus Vanadium, Titan, Chrom, und Kupfer.

6. Syntheseverfahren nach einem der Ansprüche 1 bis 5, wobei M in der Verbindungsquelle von M in einer Oxidationsstufe zwischen 3 bis 7 ist.

7. Syntheseverfahren nach Anspruch 5, wobei die Verbindungsquelle von M das Oxid des Fe(III) oder Magnetit, das Dioxid von Mangan, das Pentoxid von Divanadium, das Phosphat des trivalenten Eisens, Hydroxyphosphat des Eisens und des Lithiums oder das Nitrat des trivalenten Eisens, oder eine Mischung davon ist.

8. Syntheseverfahren nach einem der Ansprüche 1 bis 7, wobei die Verbindungsquelle von Lithium ausgewählt ist aus der Gruppe bestehend aus dem Oxid oder Hydroxid des Lithiums, dem Lithiumcarbonat, dem neutralen Phosphat Li₃PO₄, dem sauren Phosphat LiH₂PO₄, Ortho-, Meta-, oder Polysilikate des Lithiums, Lithiumsulfat, Lithiumoxalat, oder Lithiumacetat, oder eine Mischung davon.

9. Syntheseverfahren nach Anspruch 8, wobei die Verbindungsquelle von Lithium das Carbonat des Lithiums der Formel Li₂CO₃ ist.

10. Syntheseverfahren nach einem der Ansprüche 1 bis 10, wobei die Quelle für X ausgewählt ist aus der Gruppe bestehend aus Schwefelsäure, Sulfat des Lithiums, Phosphorsäure und seine Ester, dem neutralen Phosphat Li₃PO₄ oder dem sauren Phosphat LiH₂PO₄, die Monoammonium- und Diammoniumphosphate, das Phosphat des trivalenten Eisens, das Manganammoniumphosphat (NH₄MnPO₄), Silizium, Silikate des Lithiums, Alkoxysilane und ihre Produkte nach partieller Hydrolyse, und Mischungen davon.

11. Syntheseverfahren nach Anspruch 10, wobei die Vorstufenverbindung des X das Phosphat des Eisens ist, vorzugsweise das Phosphat des Eisen(III), wasserfrei oder hydratisiert.

12. Syntheseverfahren nach einem der Ansprüche 1 bis 11, wobei zumindest eines der Derivate des erhaltenen Lithiums eine Verbindung der Formel LiFePO₄, LiFe₁₋ₛMnₛPO₄, mit 0≤s≤0,9, LiFe_{1-y}Mg_{y}PO₄ und LiFe_{1-y}Ca_{y}PO₄ mit 0≤y≤0,3, LiFe_{1-s-y}MnₛMg_{y}PO₄ mit 0≤s≤1 und 0≤y≤0,2, Li₁₊ₓFeP₁₋ₓSiₓO₄ mit 0≤x≤0,9, Li₁₊ₓFe₁₋ₛMnₛP_{1-z}Si_{z}O₄ mit 0≤s≤1, Li_{1+z}Fe_{1-s-z}MnₛP_{1-z}S_{z}O₄ mit 0≤s≤1, 0≤z 0≤0,2, Li_{1+2q}Fe_{1-s-q}MnₛPO₄ mit 0≤s≤1 und 0≤q≤0,3, und Li₁₊ᵣFe₁₋ₛMnₛ(S₁₋ᵣPᵣO₄)_{1,5} und mit 0≤u≤1,5.

13. Syntheseverfahren nach einem der Ansprüche 1 bis 12, wobei die Verbindungen der Formel LiₓM_{1-y}M'_{y}(XO₄)ₙ eine Olivin- oder Nasicon-Struktur haben, umfassend die monokline Form.

14. Syntheseverfahren nach einem der Ansprüche 1 bis 13, wobei die Reduktion durch Reaktion einer reduktiven Atmosphäre, so ausgewählt, dass sie in der Lage ist, den Oxidationszustand des Metallions M auf ein Niveau zu reduzieren, das für das Herstellen der Zusammensetzung notwendig ist, ohne es auf seinen metallischen neutralen Zustand zu reduzieren, erhalten wird.

15. Syntheseverfahren nach Anspruch 14, **dadurch gekennzeichnet, dass** die reduktive Atmosphäre Wasserstoff oder ein Gas, das in der Lage ist, unter den Reaktionsbedingungen Wasserstoff zu generieren, oder Ammoniak oder eine Substanz, die in der Lage ist, Ammoniak unter den Reaktionsbedingungen zu generieren, oder Kohlenmonoxid umfasst, diese Gase pur oder in Mischungen verwendet werden, oder in Gegenwart von Wasserdampf und/oder in Gegenwart von Kohlendioxid und/oder in Gegenwart eines neutralen Gases verwendet werden.

16. Syntheseverfahren nach Anspruch 15, **dadurch gekennzeichnet, dass** die reduktive Atmosphäre durch eine Mischung CO/CO₂ oder H₂/H₂O, NH₃/H₂O oder ihre Mischungen dargestellt wird, die einen Sauerstoffdruck im Gleichgewicht generiert, der unter oder gleich dem Druck ist, der durch das Übergangselement hinsichtlich des Oxidationsgrads, der den Vorstufen, die zur Herstellung der Verbindung LiₓM_{1-y}M'_{y}(XO₄)ₙ entspricht, bestimmt ist, aber oberhalb des Drucks, der der Reduktion eines der vorhandenen Übergangselemente zum metallischen Zustand entspricht, dadurch die thermodynamische Stabilität von LiₓM_{1-y}M'_{y}(XO₄)ₙ in der Reaktionsmischung, unabhängig von der Reaktionszeit der Synthese, sicherstellend.

17. Verfahren nach Anspruch 1, **dadurch gekennzeichnet, dass** die reduktive Atmosphäre durch eine Mischung CO/CO₂ oder H₂/H₂O, NH₃/H₂O oder ihre Mischungen dargestellt wird, die einen Sauerstoffdruck im Gleichgewicht generiert, der unter oder gleich dem Druck ist, der durch eines der Übergangselemente in der Formel LiₓM_{1-y}M'_{y}(XO₄)ₙ bestimmt wird, der gegebenenfalls die Reduktion von zumindest diesem Übergangselement auf den metallischen Zustand herbeiführen kann, wobei die Temperatur und die Kontaktdauer mit der Gasphase kontrolliert werden, um die Verbindung LiₓM_{1-y}M'_{y}(XO₄)ₙ zu erhalten, wobei die Synthese-Temperatur vorzugsweise zwischen 200 und 1200°C liegt, weiter vorzugsweise zwischen 500 und 800°C, und die Kontaktdauer der reaktiven Mischung mit der Gasphase vorzugsweise zwischen 2 Minuten und 5 Stunden liegt, und weiter vorzugsweise zwischen 10 und 60 Minuten.

18. Syntheseverfahren nach Anspruch 16 oder 17, **dadurch gekennzeichnet, dass** die reduktive gasförmige Atmosphäre unter Vakuum oder unter einem Inertgas durch Zersetzung einer organischen Verbindung oder einer Mischung aus organischen Verbindungen hergestellt ist, umfassend, chemisch gebunden, zumindest Wasserstoff und Sauerstoff, und in der die Pyrolyse Kohlenmonoxid und/oder eine Mischung von Kohlenmonoxid und Kohlendioxid, Wasserstoff und/oder eine Mischung von Wasserstoff und Wasserdampf generiert, die in der Lage sind, die Reduktion, die zum Bilden der Verbindung LiₓM_{1-y}M'_{y}(XO₄)ₙ führt, auszuführen.

19. Syntheseverfahren nach Anspruch 16 oder 17, **dadurch gekennzeichnet, dass** die reduktive gasförmige Atmosphäre durch partielle Oxidation eines Kohlenwasserstoffs und/oder Kohlenstoff durch Sauerstoff oder Luft hergestellt wird, gegebenenfalls in Gegenwart von dampfförmigen Wasser, bei einer Temperatur zwischen 400 und 1200°C, was die Bildung des Kohlenmonoxyds oder Wasserstoffs oder einer Mischung des Kohlenmonoxyds und Wasserstoffs erlaubt.

20. Syntheseverfahren nach Anspruch 19, wobei der Opferkohlenstoff ausgewählt ist aus einer Gruppe bestehend aus natürlichem Graphit, künstlichem Graphit, Ruß, Acetylen-Ruß und Koks, insbesondere Koks aus Petrol, wobei der Opferkohlenstoff in Form von Partikeln mit einem Umfang von vorzugsweise weniger als 15 µm ist.

21. Syntheseverfahren nach einem der Ansprüche 18 oder 19, wobei die Menge an Opferkohlenstoff weniger oder im Wesentlichen gleich zu der Menge ist, die für das Reduzieren der reaktiven Mischung benötigt wird, ohne den Opferkohlenstoff übrig zu lassen, wobei diese Menge vorzugsweise ein Kohlenstoffatom zum sich Verbinden mit einem Sauerstoffatom bei Temperaturen über 750°C und vorzugsweise ein Atom zum sich Verbinden mit 2 Sauerstoffatomen bei Temperaturen unter 750°C ist.

22. Syntheseverfahren nach einem der Ansprüche 18 oder 19, wobei die Menge an Opferkohlenstoff gleich, Mol per Mol, zu der Hälfte der Menge an Sauerstoff ist, die benötigt wird, von der Mischung der Vorstufen-Verbindungen zu entfernen, um das Material LiₓM_{1-y}M'_{y}(XO₄)ₙ durch Reduktion zu erhalten, wenn die Reaktion bei weniger als 710C durchgeführt wird, und gleich, Mol per Mol, zu dieser Menge ist, wenn die Reaktion unter dieser Temperatur durchgeführt wird.

23. Verfahren zum Synthetisieren eines Materials gebildet aus Partikeln, wobei die Partikel einen Kern und eine Umhüllung umfassen und/oder miteinander über eine Überbrückung verbunden sind, wobei der Kern zumindest eine Verbindung der Formel LiₓM_{1-y}M'_{y}(XO₄)ₙ umfasst, in welcher x, y und n so ausgewählt sind, dass 0≤x≤2, 0≤y≤0,6 und 0≤n≤1,5 sind, M ist ein Übergangsmetall oder eine Mischung von Übergangsmetallen der ersten Reihe des Periodensystems; M' ist ein Element mit definierter Valenz ausgewählt aus Mg²⁺, Ca²⁺, Al³⁺, Zn²⁺ oder eine Kombination dieser Elemente, und X ist ausgewählt aus S, P und Si, wobei die Umhüllung aus Kohlenstoff geformt ist, der zumindest zwei Partikel verbindet, und wobei die Überbrückung aus Kohlenstoff geformt ist, der zumindest zwei Partikel untereinander verbindet,
das Verfahren umfasst das ins Gleichgewicht Setzen in den erforderlichen Verhältnissen einer Mischung, die zumindest umfasst:
a) eine Quelle für M, wobei ein Teil des oder der Übergangsmetalle, die M umfassen, sich in einer Oxidationsstufe über derjenigen des Metalls in der finalen Zusammensetzung LiₓM_{1-y}M'_{y}(XO₄)ₙ befinden;
b) eine Quelle eines Elements M';
c) eine Verbindungsquelle von Lithium;
d) eine Verbindungsquelle von X;
die Quellen der Elemente M, M', Li und X können teilweise oder vollständig in Form von Verbindungen, die mehr als ein Element umfassen, eingeführt werden,
die Synthese wird durchgeführt durch Reaktion und ins Gleichgewicht Setzen der Mischung in den erforderlichen Verhältnissen der Vorstufen a) bis d), mit einer gasförmigen reduktiven Atmosphäre, die auf eine Weise das oder die Übergangsmetalle auf den gewünschten Valenzgrad bringen,
die Synthese wird in Gegenwart eine Quelle von Kohlenstoff, genannt leitfähiger Kohlenstoff, durchgeführt,
die Synthese wird durch einen Schritt der Pyrolyse der Quellenverbindung des Kohlenstoffs durchgeführt, welcher nach oder simultan mit den Schritten der Herstellung der Mischung der Vorstufen und der Reduktion der erhaltenen Mischung zu dem Material durchgeführt wird.

24. Syntheseverfahren nach Anspruch 23, wobei der Kohlenstoff, der in dem Material in Form einer Umhüllung oder Überbrückung vorhanden ist, innig mit den Partikeln des Materials adhäriert und zu einer überlegenen elektronischen Leitfähigkeit im Vergleich zu einem Material aus entsprechenden Partikeln, die nicht umhüllt sind, trägt.

25. Syntheseverfahren nach Anspruch 23 oder 24, dadurch charakterisiert, dass die Zugabe des leitfähigen Kohlenstoffs nach der Synthese von LiₓM_{1-y}M'_{y}(XO₄)ₙ erfolgt.

26. Syntheseverfahren nach Anspruch 23, dadurch charakterisiert, dass die Zugabe des leitfähigen Kohlenstoffs gleichzeitig mit der Synthese von LiₓM_{1-y}M'_{y}(XO₄)ₙ erfolgt.

27. Syntheseverfahren nach einem der Ansprüche 23 bis 26, wobei die Reaktionsparameter so gewählt sind, insbesondere die Kinetik der Reduktion durch die Gasphase, dass der leitfähige Kohlenstoff zu dem Prozess der Reduktion nicht signifikant beiträgt.

28. Syntheseverfahren nach Anspruch 27, wobei die Reaktionsparameter, wie die Fließgeschwindigkeit und die Zusammensetzung der Gasphase, die Temperatur und die Kontaktzeit so ausgewählt sind, dass der leitfähige Kohlenstoff nicht auf eine signifikante Weise am Prozess der Reduktion teilnimmt, d.h. dass der Prozess der Reduktion durch die Gasphase bewirkt wird, und insbesondere auf eine Weise, in welcher die Reaktionstemperatur vorzugsweise unter 900°C liegt und die Reaktionszeit unter 5 Stunden liegt, weiter vorzugsweise auf eine Weise, in welcher die Reaktionstemperatur unter 800°C und/oder die Reaktionszeit unter 1 Stunde liegt.

29. Syntheseverfahren nach einem der Ansprüche 1 oder 23, wobei der Wert von x in LiₓM_{1-y}M'_{y}(XO₄)ₙ so ausgewählt ist, eine thermodynamische Kontrolle und /oder schnelle Kinetik der Reduktion sicherzustellen, indem es erlaubt wird, dass die gasförmigen reduktiven Atmosphären so ausgewählt werden, dass sie durch einfaches Mischen von Gas oder Reformierung von einfachen organischen Molekülen bereitstellbar sind.

30. Syntheseverfahren nach einem der Ansprüche 23 bis 29, wobei die organische Quellensubstanz des leitfähigen Kohlenstoffs so ausgewählt ist, dass die Partikel, die nach dem Schritt der Pyrolyse erhalten werden, die Form und die granulometrische Verteilung der Vorstufen des Syntheseverfahrens besitzen.

31. Syntheseverfahren nach einem der Ansprüche 23 bis 30, wobei die organische Quellensubstanz des leitfähigen Kohlenstoffs ausgewählt ist aus der Gruppe bestehend aus Polymeren und Oligomeren mit einem Kohlenstoffskelett, einfachen Kohlenhydraten oder Polymeren und aromatischen Kohlenwasserstoffen.

32. Syntheseverfahren nach Anspruch 31, wobei die organische Quellensubstanz des leitfähigen Kohlenstoffs so ausgewählt ist, dass eine Ablagerung von leitfähigem Kohlenstoff auf der Oberfläche der festen Partikel gebildet ist (d.h. Umhüllung) und/oder Brücken von Kohlenstoff zwischen diesen festen Partikeln gebildet sind (d.h. Überbrückung) während der Pyrolyse.

33. Syntheseverfahren nach einem der Ansprüche 23 bis 32, **dadurch gekennzeichnet, dass** die Quelle an leitfähigem Kohlenstoff in einer gleichen Verbindung oder in der Mischung, die diese Quelle darstellt, Sauerstoff und Wasserstoff, die chemisch verbunden sind, umfasst und in welcher die Pyrolyse neben der Deponierung von Kohlenstoff lokal Kohlenmonoxid und/oder Kohlendioxid und/oder Wasserstoff und Wasserdampf freisetzt, um lokal eine reduktive Atmosphäre, die für die Synthese des Materials LiₓM_{1-y}M'_{y}(XO₄)ₙ erforderlich ist, bereitzustellen.

34. Syntheseverfahren nach einem der Ansprüche 32 bis 33, **dadurch gekennzeichnet, dass** die Kohlenstoffquelle zumindest eine Verbindung der Gruppe bestehend aus Polyethylen, Polypropylen, Glukose, Fruktose, Sucrose, Xylose, Sorbose, Stärke, Cellulose und seine Ester, Blockpolymere aus Ethylen und Ethylenoxid und Polymere aus Furfurylalkohol ist.

35. Syntheseverfahren nach einem der Ansprüche 23 bis 34, **dadurch gekennzeichnet, dass** die leitfähige Kohlenstoffquelle am Anfang oder während des Schritts des Mischens der Vorstufen der Reaktion a) bis d), wie in Anspruch 1 definiert, zugefügt wird.

36. Syntheseverfahren nach Anspruch 35, **dadurch gekennzeichnet, dass** der Gehalt der Verbindungsquelle von leitfähigem Kohlenstoff in dem reaktionsfähigen Milieu, das der Reduktion unterliegt, so gewählt ist, dass der Gehalt des leitfähigen Kohlenstoffes in dem reaktionsfähigen Milieu vorzugsweise im Bereich von 0,1 und 25 % liegt.

37. Syntheseverfahren nach einem der Ansprüche 1 bis 36, wobei die thermische Behandlung, die die Reaktion zur Bildung von LiₓM_{1-y}M'_{y}(XO₄)ₙ und die Reduktion und die Pyrolyse umfasst, durch Erwärmung ausgehend von der üblichen Temperatur auf eine Temperatur zwischen 500 und 1100°C durchgeführt wird.

38. Syntheseverfahren nach Anspruch 37, wobei die erreichte Maximaltemperatur zwischen 500 und 800°C liegt.

39. Syntheseverfahren nach einem der Ansprüche 1 bis 38, **dadurch gekennzeichnet, dass** die Temperatur und die Dauer der Synthese als Funktion der Eigenschaften des Übergangsmetalls ausgewählt sind, d.h. oberhalb einer minimalen Temperatur, bei der die reaktive Atmosphäre in der Lage ist, das oder die Übergangselemente auf die Oxidationsstufe, die in der Verbindung LiₓM_{1-y}M'_{y}(XO₄)ₙ nötig ist, zu reduzieren, und unterhalb einer Temperatur oder einer Dauer, in der eine Reduktion des oder der Übergangselemente zum metallischen Zustand oder zu einer Oxidation des Kohlenstoffs, die aus der Pyrolyse der organischen Substanz resultiert, führt.

40. Syntheseverfahren nach Anspruch 39, wobei die Verbindung LiₓM_{1-y}M'_{y}(XO₄)ₙ LiMPO₄ ist und wobei die Rate an leitfähigem Kohlenstoff nach der Pyrolyse zwischen 0,1 und 10 Masse -% bezogen auf die Masse der Verbindung LiMPO₄ ist.

41. Syntheseverfahren nach einem der Ansprüche 23 bis 40, **dadurch gekennzeichnet, dass** die Verbindungsquelle des Kohlenstoffs einfach dispergierbar ist durch die verwendete Behandlung zum Sicherstellen einer innigen Mischung der Vorstufen a) bis d) durch Verrühren und/oder durch mechanisches Zerkleinern und/oder Ultraschallhomogenisierung, in Gegenwart oder Abwesenheit einer Flüssigkeit oder durch Sprühtrocknung einer Lösung von einer oder mehreren Vorstufen, und/oder einer Suspension und/oder einer Emulsion.

42. Syntheseverfahren nach einem der Ansprüche 23 bis 41, umfassend die zwei Schritte:
i) inniges trockenes Zerkleinern oder inniges Zerkleinern in einem Solvenz, von den Verbindungsquellen, darin enthalten leitfähiger Kohlenstoff, und gegebenenfalls Trocknen; und
ii) thermische Behandlung unter Durchlauf einer kontrollierten reduktiven Atmosphäre.

43. Syntheseverfahren nach einem der Ansprüche 23 bis 42, **dadurch gekennzeichnet, dass** das erhaltene Material eine Leitfähigkeit größer als 10⁻⁸ S cm⁻¹, gemessen über eine Probe von kompaktiertem Puder von 100 kg cm⁻².

44. Syntheseverfahren nach einem der Ansprüche 1 bis 22, wobei die erhaltene Verbindung LiFePO₄ ist.

45. Syntheseverfahren nach einem der Ansprüche 23 biss 44, wobei der Kern der Partikel mindestens aus 95 % aus einer Verbindung der Formel LiₓM_{1-y}M'_{y}(XO₄)ₙ besteht (vorzugsweise der Formel LiFePO₄), und der Gehalt an Kohlenstoff der Umhüllung und/oder Überbrückung in dem erhaltenen Material ist vorzugsweise in einem Bereich von 0,2 und 5 % im Verhältnis zu der Masse des durch die Synthese erhaltenen Materials.

46. Syntheseverfahren nach einem der Ansprüche 44 oder 45, wobei die Verbindungsquelle von Eisen zumindest teilweise ausgewählt ist aus der Gruppe bestehend aus den Phosphaten des Eisens, den Oxy- oder Hydroxyphosphaten des Eisens, den Oxiden des Eisens den Oxy- oder Hydroxyphosphaten des Eisens und den Oxiden des Eisens und des Lithiums, wobei zumindest ein Teil des Eisens in der Oxidationsstufe III vorliegt, oder Mischungen davon.

47. Syntheseverfahren nach einem der Ansprüche 44 bis 46, wobei die Verbindungsquelle von Lithium das Phosphat des Lithiums, das Dihydrogenphosphat des Lithiums, das Carbonat des Lithiums, das Acetat des Lithiums oder das Hydroxyd des Lithiums ist, oder Mischungen davon.

48. Syntheseverfahren nach einem der Ansprüche 44 bis 47, wobei die Verbindungsquelle von Phosphor ein Phosphat von Ammonium, eine Ortho-, Meta- oder Pyrophosphorsäure oder ein Pentoxid des Phosphors ist.

49. Syntheseverfahren nach einem der Ansprüche 1 bis 48, wobei der Schritt der Reduktion in dem Reaktor durchgeführt wird, der dem Herstellen der Mischung der Vorstufen gedient hat oder dient, oder in einem anderen Reaktor.

50. Material in Form von Partikeln, umfassend einen Kern und eine Umhüllung von Kohlenstoff um den Kern und/oder eine Überbrückung von Kohlenstoff zwischen den Partikeln, der Kern umfassend zumindest eine Verbindung der Formel LiₓM_{1-y}M'_{y}(XO₄)ₙ, in welcher x, y und n so ausgewählt sind, dass 0≤x≤2, 0≤y≤0,6 und 0≤n≤1,5 sind; M ist ein Übergangsmetall oder eine Mischung von Übergangsmetallen der ersten Reihe des Periodensystems; M' ist ein Element mit definierter Valenz ausgewählt aus Mg²⁺, Ca²⁺, Al³⁺, Zn²⁺, und X ist ausgewählt aus S, P und Si, wobei das Material eine elektrische Leitfähigkeit von mehr als 10⁻⁸ S cm⁻¹ aufweist, gemessen auf einer Probe des Puders, welches mit einem Druck von größer oder gleich 3000 kg cm⁻² kompaktiert ist.

51. Material, erhalten durch ein Verfahren nach einem der Ansprüche 23 bis 49, umfassend einen Kern und eine Umhüllung und/oder eine Überbrückung, wobei das Material einen Gesamtgehalt an Kohlenstoff zwischen 0,1 und 0,2 %, Grenzwerte eingeschlossen, umfasst, vorzugsweise einen Gesamtgehalt größer als 0,1 % der Gesamtmasse des Materials.

52. Material in Form von Partikeln gemäß Anspruch 50, umfassend einen Kern und eine Umhüllung von Kohlenstoff um den Kern und/oder eine Überbrückung von Kohlenstoff zwischen den Partikeln, der Kern umfassend zumindest eine Verbindung der Formel LiₓM_{1-y}M'_{y}(XO₄)ₙ, in welcher x, y und n so ausgewählt sind, dass 0≤x≤2, 0≤y≤0,6 und 1≤n≤1,5 sind; M ist ein Übergangsmetall oder eine Mischung von Übergangsmetallen der ersten Reihe des Periodensystems; M' ist ein Element mit definierter Valenz ausgewählt aus Mg²⁺, Ca²⁺, Al³⁺, Zn²⁺, und X ist ausgewählt aus S, P und Si, wobei das Material eine elektrische Leitfähigkeit von mehr als 10⁻⁸ S cm⁻¹ aufweist, gemessen auf einer Probe des Puders, welches mit einem Druck von größer oder gleich 3000 kg cm⁻², vorzugsweise 7350 kg cm⁻², kompaktiert ist, und aufweisend einen Gesamtgehalt von Kohlenstoff größer als 0,3% der Gesamtmasse des Materials.

53. Elektrochemische Zelle, umfassend zumindest zwei Elektroden und zumindest einen Elektrolyten, **dadurch gekennzeichnet, dass** zumindest eine der Elektroden ein Material nach einem der Ansprüche 50 bis 52 enthält.

54. Zelle nach Anspruch 53, **dadurch gekennzeichnet, dass** der Elektrolyt ein Polymer ist, welches solvatisiert oder nicht, gegebenenfalls plastifiziert oder geliert durch eine polare Flüssigkeit, die in Lösung ein oder mehrere metallische Salze enthält.

55. Zelle nach Anspruch 53, **dadurch gekennzeichnet, dass** der Elektrolyt eine polare Flüssigkeit, immobilisiert durch einen mikroporösen Separator, ist, die in Lösung ein oder mehrere metallische Salze enthält.

56. Zelle nach Anspruch 55, **dadurch gekennzeichnet, dass** zumindest eines der metallischen Salze ein Lithiumsalz ist.

57. Elektrochemische Zelle nach einem der Ansprüche 53 bis 56, **dadurch gekennzeichnet, dass** zumindest eine der negativen Elektroden aus metallischem Lithium, einer Legierung aus Lithium mit Aluminium, Antimon, Zink, Zinn, gegebenenfalls eine nanomolekulare Mischung mit dem Oxid des Lithiums, oder eine Insertionsverbindung von Kohlenstoff, insbesondere Graphit, zweifaches Nitrid von Lithium oder Eisen, von Kobalt oder Mangan, ein Titanat von Lithium der Formel LiₓTi_{(5+3y)/4}O₄ mit 1≤x≤(11-3y)/4 und mit 0≤y≤1 ist.

58. Zelle nach einem der Ansprüche 53 bis 57, **dadurch gekennzeichnet, dass** eine der positiven Elektroden eines der Produkte, erhalten nach einem Verfahren gemäß einem der Ansprüche 1 bis 49 enthält, allein verwendet oder in der Mischung mit einem zweifachen Oxid von Kobalt und Lithium, oder mit einem komplexen Oxid der Formel LiₓNi_{1-y-z-q-r}Co_{y}Mg_{z}AlᵣO₂ mit 0,05≤x≤1, 0≤y, z und r≤0,3, oder mit einem komplexen Oxid der Formel LiₓNi_{1-y-z-q-r}Co_{y}Mg_{z}AlᵣO_{2-q}F mit 0,05≤x≤1, und 0≤y,z,r,q≤0,3 verwendet wird.

59. Zelle nach einem der Ansprüche 53 bis 58, **dadurch gekennzeichnet, dass** das verwendete Polymer zum Verbinden der Elektroden oder als Elektrolyt ein Polyether, ein Polyester, ein Polymer basierend auf Einheiten von Methacrylaten von Methyl, ein Polymer basierend auf Acrylonitril, und/oder ein Fluorid von Vinyliden, oder eine Mischung davon ist.

60. Zelle nach einem der Ansprüche 53 bis 59, **dadurch gekennzeichnet, dass** die Zelle ein nicht protogenes Lösemittel umfasst, welches Ethylencarbonat, Propylencarbonat, ein Alkylcarbonat mit 1 bis 4 Kohlenstoffatomen, γ-Butyrolacton, ein Tetraalkylsulfamid, ein α-ω-Dialkylether eines Mono-, Di-, Tri-, Tetra-, oder Oligo-Ethylenglycols mit einem Molekulargewicht unter oder gleich 5000, oder Mischungen der oben genannten Lösungsmitteln umfasst.

61. Zelle nach einem der Ansprüche 53 bis 60, **dadurch gekennzeichnet, dass** die Zelle als Primär- oder Sekundärgenerator, als Superkondensator oder als System zur Lichtmodulierung funktioniert.

62. Elektrochemische Zelle nach einem der Ansprüche 53 bis 61, funktionierend als Superkondensator, **dadurch gekennzeichnet, dass** das Material der positiven Elektrode ein Material gemäß Ansprüchen 50 bis 52 ist, und die negative Elektrode ein Kohlenstoff ist, der eine spezifische Oberfläche von größer als 50 m²g⁻¹ in Form von Puder, Fasern oder mesoporösem Komposit des Typs Kohlenstoff-Kohlenstoff-Komposit hat.

63. Elektrochemische Zelle nach einem der Ansprüche 53 bis 62, **dadurch gekennzeichnet, dass** sie als System zur Lichtmodulierung funktioniert und dass die optisch inaktive Gegenelektrode ein Material gemäß Ansprüchen 50 bis 52 ist, wobei das Material als dünne Lage auf einem transparenten, leitenden Träger aufgebracht ist, vom Typ Glas oder Polymer beschichtet mit einem dotierten Zinnoxid der Formel SnO₂:Sb oder SnO₂:F oder einem dotierten Indiumoxid der Formel In₂O₃:Sn.

## Claims

1. Method for synthesis of a compound of formula LiₓM_{1-y}M'_{y}(XO₄)ₙ, in which x, y and n are chosen, such that 0≤x≤2, 0≤y≤0.6 and 1≤n≤1.5; M is a transition metal or a mixture of transition metals of the first row of the periodic table; M' is an element with defined valence chosen from Mg²⁺, Ca²⁺, Al³⁺, Zn²⁺ or a combination of these elements, and X is chosen from S, P and Si,
by putting into equilibrium in the required proportions of a mixture comprising at least:
a) a source for M, whereof a part of at least the transition metal(s), which comprise M, are in an oxidation state higher than the one of the metal in the final compound LiₓM_{1-y}M'_{y}(XO₄)ₙ
b) a source of an element M';
c) a compound source of lithium; and
d) a compound source of X,
the sources of the elements M, M', Li and X can be partly of fully introduced in form of compounds comprising more than one source element, and
the synthesis is performed by reaction and putting into equilibrium the intimate and/or homogeneous mixture in the required proportions of the precursors a) to d), and by reduction in a manner to bring the transition metal(s) to a degree of valence, which is wanted.

2. Synthesis method according to claim 1, wherein the reduction of the mixture of the precursors a) to d) is performed with a gaseous reductive atmosphere.

3. Synthesis method according to claim 1 or 2, wherein the source of M is also source of X and/or the source of M' is also source of X and/or the source of lithium is also source of X and/or the source of X is also source of lithium.

4. Synthesis method according to one of the preceding claims 1 to 3, wherein putting into equilibrium of the mixture of precursors a) to d) is done in form of an intimate and/or homogeneous mixture.

5. Synthesis method according to any one of the preceding claims 1 to 4, wherein the transition metal(s) is (are) at least partially chosen from the group consisting of iron, manganese, cobalt, and nickel, the complementation of transition metals is chosen from the group constituted from vanadium, titan, chrome, and copper.

6. Synthesis method according to claim 5, wherein the element M in the compound source of M is in an oxidation state between 3 and 7.

7. Synthesis method according to claim 5, wherein the compound source for M is the oxide of iron III or magnetite, the dioxide of manganese, the pentoxide of divanadium, the phosphate of the trivalent iron, the nitrate of trivalent iron, the sulfate of the trivalent iron, hydroxy phosphate of iron and of lithium, the sulfate or the nitrate of the trivalent iron, or a mixture thereof.

8. Synthesis method according to any one of claims 1 to 7, wherein the compound source for lithium is chosen from the group consisting of oxide or hydroxide of lithium, lithium carbonate, neutral phosphate Li₃PO₄, the acidic phosphate LiH₂PO₄, ortho, meta, or polysilicates of lithium, lithium sulfate, lithium oxalate, or lithium acetate of a mixture thereof.

9. Synthesis method according to claim 8, wherein the compound source of lithium is the carbonate of lithium of formula Li₂CO₃.

10. Synthesis method according to any one of claims 1 to 9, wherein the source for X is chosen from the group consisting of sulfuric acid, lithium sulfate, phosphoric acid and its esters, neutral phosphate Li₃PO₄ or the acidic phosphate LiH₂PO₄, the monoammonium and diammonium phosphates, phosphate of the trivalent iron, the manganese ammonium phosphate (NH₄MnPO₄), silicium, silicates of lithium, alcoxysilanes and their products of partial hydrolysis, and mixtures thereof.

11. Synthesis method according to claim 10, wherein the precursor compound of X is the phosphate of iron, preferably the phosphate of iron (III), anhydrate or hydrated.

12. Synthesis method according to any one of claims 1 to 11, wherein at least one of the derivatives of lithium obtained is of formula LiFePO₄, LiFe₁₋ₛMnₛPO₄, with 0≤s≤0,9, LiFe_{1-y}Mg_{y}PO₄ and LiFe_{1-y}Ca_{y}PO₄ with 0≤y≤0,3, LiFe_{1-s-y}MnₛMg_{y}PO₄ with 0≤s≤1 and 0≤y≤0,2, Li₁₊ₓFeP₁₋ₓSiₓO₄ with 0≤x≤0,9, Li₁₊ₓFe₁₋ₛMnₛP_{1-z}Si_{z}O₄ with 0≤s≤1, Li_{1+z}Fe_{1-s-z}MnₛP_{1-z}S_{z}O₄ with 0≤s≤1, 0≤z 0≤0,2, Li_{1+2q}Fe_{1-s-q}MnₛPO₄ with 0≤s≤1 and 0≤q≤0,3, and Li₁₊ᵣFe₁₋ₛMnₛ(S₁₋ᵣPᵣO₄)_{1,5} und with 0≤u≤1,5.

13. Synthesis method according to any one of claims 1 to 12, wherein the compound of formula LiₓM_{1-y}M'_{y}(XO₄)ₙ have an olivine or nasicon structure, including the monocline form.

14. Synthesis method according to any one of claims 1 to 13, wherein the reduction is obtained by action of a reductive atmosphere chosen such that it can reduce the oxidation state of the metal ion M to the level required for the formation of the compound without reducing it to the neutral metal state.

15. Synthesis method according to claim 14, wherein the reductive atmosphere comprises hydrogen or a gas able to generate hydrogen in the synthesis conditions, ammoniac or a substance able to generate ammoniac in the synthesis conditions, or carbon monoxide, these gases are used purely or in a mixture or used in the presence of water vapor and/or in the presence of carbon dioxide and/or in the presence of a neutral gas.

16. Synthesis method according to claim 15, wherein the reductive atmosphere is formed from a mixture of CO/CO₂ or H₂/H₂O, NH₃/H₂O or their mixture, which generates an equilibrium pressure of oxygen which is inferior or equal to the one determined by the transition metal in the degree of oxidation, corresponding to the precursors that are introduced to form the compound LiₓM_{1-y}M'_{y}(XO₄)ₙ, but superior to the one corresponding to the reduction of one of the transition elements in the metallic state, assuring the thermodynamic stability of LiₓM_{1-y}M'_{y}(XO₄)ₙ in the reactive mixture independent from the reaction duration of the synthesis.

17. Synthesis method according to claim 15, wherein the reductive atmosphere is formed from a mixture of CO/CO₂ or H₂/H₂O, NH₃/H₂O or their mixture, which generates an equilibrium pressure of oxygen which is inferior or equal to the one determined by one of the transition elements present in LiₓM_{1-y}M'_{y}(XO₄)ₙ,
which may conduct the reduction of at least this transition element to the metallic state, obtaining the compound LiₓM_{1-y}M'_{y}(XO₄)ₙ is realized by control of the temperature and the contact duration with the gaseous phase,
the synthesis temperature is preferably between 200 and 1200°C, more preferably between 500 and 800°C, and the contact duration of the reactive mixture with the gaseous phase is preferably between 2 minutes and 5 hours, and more preferably between 10 and 60 minutes.

18. Synthesis method according to claim 16 or 17, wherein the reductive gaseous atmosphere is obtained by decomposition under vacuum or under an inert atmosphere of an organic compound or of a mixture of organic compounds, containing, chemically linked, at least hydrogen and oxygen, and in which the pyrolysis generates carbon monoxide and/or a mixture of carbon monoxide and carbon dioxide, hydrogen and/or a mixture of hydrogen and water vapor, susceptible of effectuating the reduction leading to the formation of the compound LiₓM_{1-y}M'_{y}(XO₄)ₙ.

19. Synthesis method according to claim 16 or 17, wherein the reductive gaseous atmosphere is obtained by partial oxidation by oxygen or by air of a hydrocarbon and/or a carbon called sacrificial carbon, optionally in the presence of water vapor, at a temperature between 400 and 1200°C allowing the formation of the monoxide of carbon or hydrogen or a mixture of monoxide of carbon and hydrogen.

20. Synthesis method according to claim 19, wherein the sacrificial carbon is chosen from the group consisting of natural or artificial graphite, carbon black or black of acetylene and the cokes, in particular the cokes of petrol, the sacrificial carbon being in form of particles with a diameter of preferably below 15 µm.

21. Synthesis method according to claim 18 or 19, wherein the amount of sacrificial carbon is inferior or essentially equal to the amount required for reducing the reactive mixture without leaving residual sacrificial carbon, this amount is preferably one atom of carbon for combining with one atom of oxygen at temperatures above 750°C and it is preferably one atom for combining with two atoms of oxygen at temperatures below 750°C.

22. Synthesis method according to claim 18 or 19, wherein the amount of sacrificial carbon is equal, mole per mole, to half of the amount of oxygen necessary to remove from the mixture of precursor compounds in order to obtain the material LiₓM_{1-y}M'_{y}(XO₄)ₙ by reduction, when the reaction is realized below 710C and equal, mole per mole to this amount, when the reaction is realized below this temperature.

23. Method for the synthesis of a material comprising particles, the particles comprising a core and a coating and/or being connected with each other by a bridging, the core comprising at least a compound of formula LiₓM_{1-y}M'_{y}(XO₄)ₙ, in which x, y and n are chosen, such that 0≤x≤2, 0≤y≤0.6 and 1≤n≤1.5; M is a transition metal or a mixture of transition metals of the first row of the periodic table; M' is an element with defined valence chosen from Mg²⁺, Ca²⁺, Al³⁺, Zn²⁺ or a combination of these elements, and X is chosen from S, P and Si, the coating being formed from a carbon connecting at least two particles, and the bridging being formed from a carbon connecting at least two particles,
the method comprising putting into equilibrium in the required proportions of a mixture comprising at least:
a) a source for M, whereof a part of at least the transition metal(s), which comprise M, are in an oxidation state higher than the one of the metal in the final compound LiₓM_{1-y}M'_{y}(XO₄)ₙ
b) a source of an element M';
c) a compound source of lithium; and
d) a compound source of X,
the sources of the elements M, M', Li and X can be partly of fully introduced in form of compounds comprising more than one source element, and
the synthesis is performed by reaction and putting into equilibrium the mixture in the required proportions of the precursors a) to d), and by reduction in a manner to bring the transition metal(s) to a degree of valence, which is wanted,
the synthesis is conducted in the presence of a source of carbon called conductive carbon,
the synthesis is conducted by a step of pyrolysis of the compound source of carbon, conducted after or simultaneously with the steps of preparation of the mixture of the precursors and the reduction of the obtained mixture, of this material.

24. Synthesis method according to claim 23, wherein the carbon present in the material in form of a coating or a bridging is intimately adherent to the particles of the material and confer to it an electronic conductivity superior to the one of the material formed from corresponding non-coated particles.

25. Method according to claim 23 or 24, **characterized in that** the addition of conductive carbon is effectuated after synthesis of LiₓM_{1-y}M'_{y}(XO₄)ₙ.

26. Method according to claim 23, **characterized in that** the addition of conductive carbon is effectuated simultaneously with the synthesis of LiₓM_{1-y}M'_{y}(XO₄)ₙ.

27. Synthesis method according to any one of claims 23 to 26, wherein the reaction parameters are chosen, in particular the kinetics of the reduction by the gaseous phase, in a manner in which the conductive carbon does not participate in a significant manner in the reduction process.

28. Synthesis method according to claim 27, wherein the reaction parameters, such as the flux and the composition of the gaseous phase, the temperature and the contact duration are chosen such that the conductive carbon does not participate in a significant manner in the reduction process, that is the reduction process is the result of the gaseous phase, and in particular such that the reaction temperature is preferably below 900°C, and the duration of the reaction is below 5 hours, further preferably such that the reaction temperature is below 800°C and/or the duration below 1 hour.

29. Synthesis method according to claim 1 or 23, wherein the value of x in LiₓM_{1-y}M'_{y}(XO₄)ₙ is chosen in a manner to assure a thermodynamic control and/or rapid kinetics of the reduction, by allowing selecting a gaseous reductive atmosphere easily assessible by single mixture of gas or by reforming simple organic molecules.

30. Synthesis method according to any one of claims 23 to 29, wherein the organic source of conductive carbon substance is selected such that the particles of the material obtained after the step of pyrolysis comprise essentially the shape and the granulometric distribution of the precursors of the synthesis reaction.

31. Synthesis method according to any one of claims 23 to 30, wherein the organic source substance of conductive carbon is selected from the group consisting of polymers and oligomers with a carbon skeleton, simple carbohydrates or polymers and aromatic hydrocarbons.

32. Synthesis method according to claim 31, wherein the organic source substance of conductive carbon is selected such that it leaves a deposit of conductive carbon on the surface, i.e. coating, of the solid particles constitutive of the material and/or bridges of carbon between the solid particles, i.e. bridging, as of the pyrolysis.

33. Synthesis method according to any one of claims 23 to 32, wherein the source of conductive carbon comprises, in the same compound or the mixture constituting this source, oxygen and hydrogen that are chemically linked, and in which the pyrolysis frees locally carbon monoxide and/or carbon dioxide and/or hydrogen and vaporized water, next to the deposition of carbon, in order to create the reducing atmosphere required for the synthesis of the material LiₓM_{1-y}M'_{y}(XO₄)ₙ.

34. Synthesis method according to claim 32 or 33, wherein the carbon source is at least a compound of the group consisting of polyethylene, polypropylene, glucose, fructose, sucrose, xylose, sorbose, starch, cellulose and its esters, block polymers from ethylene and ethylene oxide and polymers from furfuryl alcohol.

35. Synthesis method according to any one of claims 23 to 34, wherein the source of conductive carbon is added at the beginning or during the step of mixture of the precursors of the reaction a) to d) as defined in claim 1.

36. Synthesis method according to claim 35, wherein the amount of source substance of conductive carbon present in the reactive milieu submitted to reduction is selected such that the amount of conductive carbon in the reactive milieu is preferably between 0.1 and 25 %, boundaries included.

37. Method according to any one of claims 1 to 36, wherein the thermic treatment which includes the reaction of formation of LiₓM_{1-y}M'_{y}(XO₄)ₙ, the reduction, the pyrolysis, is realized by heating from the ordinary temperature to a temperature between 500 and 1100°C.

38. Synthesis method according to claim 37, wherein the maximal achieved temperature is between 500 and 800°C.

39. Synthesis method according to any one of claims 1 to 38, wherein the temperature and the duration of synthesis are chosen as function of the nature of the transition metal. i.e. above a minimal temperature at which the reactive atmosphere is able to reduce the one or more transition elements to the oxidation state required for the compound LiₓM_{1-y}M'_{y}(XO₄)ₙ, and below a temperature or a duration which are used to achieve reduction of the one or more transition elements to the metallic state or oxidation of carbon resulting from pyrolysis of the organic substance.

40. Synthesis method according to claim 39, wherein the compound LiₓM_{1-y}M'_{y}(XO₄)ₙ is LiMPO₄ and wherein the concentration of conductive carbon is comprised between 0.1 and 10 mass % with respect to the mass of the compound LiMPO₄.

41. Synthesis method according to any one of claims 23 to 40, wherein the compound source of carbon is easily dispersible by the utilized treatment for assuring an intimate mixture of the precursors a) to d) by agitation and/or mechanical comminution and/or ultrasonic homogenization, in the presence or absence of a liquid, or by spray-drying of a solution of one or more precursors, and/or of a suspension and/or of an emulsion.

42. Synthesis method according to any one of claims 23 to 41, comprising the two steps:
i) intimate dry comminution of the source compounds or comminution in a solvent, comprising therein the conductive carbon, and drying, if necessary; and
ii) thermic treatment during supply of a controlled reductive atmosphere.

43. Synthesis method according to any one of claims 23 to 42, **characterized in that** the obtained material has an electric conductivity of more than 10⁻⁸ S cm⁻¹, measured for a powder sample with is compacted with a pressure of 100 kg cm⁻².

44. Synthesis method according to any one of claims 1 to 22, wherein the obtained material is LiFePO₄.

45. Synthesis method according to any one of claims 23 to 44, wherein the core of particles of the obtained material is composed of at least 95 % of a compound of formula LiₓM_{1-y}M'_{y}(XO₄)ₙ (preferably of formula LiFePO₄), and the content of conductive carbon of the coating and/or bridging is preferably between 0.2 and 5 %, boundaries included, in relation to the weight of the obtained material by the synthesis.

46. Synthesis method according to claim 44 or 45, wherein the compound source of iron is selected at least partially form the group consisting of the phosphates of iron, the oxy or hydroxyphosphates of iron and the oxides of iron and lithium, wherein at least a part of iron is in the oxidation state III, or mixtures thereof.

47. Synthesis method according to any one of claims 44 to 47, wherein the compound source for lithium is the phosphate of lithium, the dihydrogen phosphate of lithium, lithium carbonate, lithium acetate, lithium hydroxide, or a mixture thereof.

48. Synthesis method according to any one of claims 44 to 47, wherein the compound source of phosphor is a phosphate of ammonium, the ortho-, meta- or pyrophosphoric acid, or a pentoxide of phosphor.

49. Synthesis method according to any one of claims 1 to 48, wherein the step of reduction is realized in the reactor serving or having served for the preparation of the mixture of the precursors or in a different reactor.

50. Material in form of particles comprising a core and a coating of carbon around the core and/or a bridging of carbon between the particles, wherein the core comprises at least a compound of formula LiₓM_{1-y}M'_{y}(XO₄)ₙ, in which x, y and n are chosen, such that 0≤x≤2, 0≤y≤0.6 and 1≤n≤1.5; M is a transition metal or a mixture of transition metals of the first row of the periodic table; M' is an element with defined valence chosen from Mg²⁺, Ca²⁺, Al³⁺, Zn²⁺ or a combination of these elements, and X is chosen from S, P and Si,
the material having a conductivity of more than 10⁻⁸ S cm⁻¹, measured for a powder sample with is compacted with a pressure above or equal to 3000 kg cm⁻².

51. Material obtainable by a method according to any one of claims 23 to 49, comprising a core and a coating and/or a bridging, the material having a total amount of carbon of between 0.1 and 0.2%, boundaries included, and preferably which is above 0.1% of the total mass of the material.

52. Material in form of particles according to claim 50, comprising a core and a coating of carbon around the core and/or a bridging of carbon between the particles, wherein the core comprises at least a compound of formula LiₓM_{1-y}M'_{y}(XO₄)ₙ, in which x, y and n are chosen, such that 0≤x≤2, 0≤y≤0.6 and 1≤n≤1.5; M is a transition metal or a mixture of transition metals of the first row of the periodic table; M' is an element with defined valence chosen from Mg²⁺, Ca²⁺, Al³⁺, Zn²⁺ or a combination of these elements, and X is chosen from S, P and Si,
the material having a conductivity of more than 10⁻⁸ S cm⁻¹, measured for a powder sample with is compacted with a pressure above or equal to 3000 kg cm⁻², preferably 7350 kg cm⁻², and having a total amount of carbon above 0.3% of the total mass of the material.

53. Electrochemical cell comprising at least two electrodes and at least one electrolyte, wherein at least one of the electrodes comprises a material according to any one of claims 50 to 52.

54. Cell according to claim 53, wherein the electrolyte is a polymer which is solvated or not, optionally plastified or gelated by a polar liquid, that comprises one or more metallic salts in solution.

55. Cell according to claim 53, wherein the electrolyte is a polar liquid, immobilized by a microporous separator and comprising one or more metallic salts in solution.

56. Cell according to claim 55, wherein at least one of the metallic salts is a lithium salt.

57. Cell according to any one of claims 53 to 56, wherein at least one of the negative electrodes is a metallic lithium, an alloy of lithium, in particular with aluminum, antimony, zinc, tin, optionally a nanomolecular mixture with the oxide of lithiui or an insertion compound of carbon, in particular graphite, double nitride of lithium or iron, of cobalt or manganese, a titanate of lithium of formula LiₓTi_{(5+3y)/4}O₄ with 1≤x≤(11-3y)/4 and with 0≤y≤1.

58. Cell according to any one of claims 53 to 57, wherein at least one of the positive electrodes comprises a product obtainable by a method according to any one of claims 1 to 49, utilized alone or in a mixture with a dual oxide of cobalt and lithium, or with a complex oxide of formula LiₓNi_{1-y-z-q-r}Co_{y}Mg_{z}AlᵣO₂ with 0.05≤x≤1, 0≤y, z and r≤0.3, or with a complex oxide of formula LiₓNi_{1-y-z-q-r}Co_{y}Mg_{z}AlᵣO_{2-q}F_{q} with 0.05≤x≤1, and 0≤y,z,r,q≤0.3.

59. Cell according to any one of claims 53 to 58, wherein the utilized polymer for connecting the electrodes or as electrolytes is a polyether, polyester, polymer based on methacrylate units of methyl, polymer based on acrylonitrile and/or a fluoride of vinylidene, or a mixture thereof.

60. Cell according to any one of claims 53 to 59, wherein the cell comprises a non-protogenic solvent, which comprises ethylene carbonate, propylene carbonate, an alkyl carbonate with 1 to 4 carbon atoms, γ-butyrolactone, a tetraalkylsulfamide, a α-ω-dialkylether of a mono-, di-, tri-, tetra-, or oligo-ethylene glycol with a molecular weight below or equal to 5000, or mixtures thereof.

61. Cell according to any one of claims 53 to 60, wherein the cell functions as primary or secondary generator, as super-capacitor or as system for modulating light.

62. Electrochemical cell according to any one of claims 53 to 61, functioning as super-capacitor, wherein the material of the positive electrode is formed from the material according to claims 50 to 52, and the negative electrode is a carbon having a specific surface higher than 50 m²g⁻¹ in form of powder, fibers, or mesoporous composite of type carbon-carbon-composite.

63. Electrochemical cell according to any one of claims 53 to 62, functioning as system for modulating light, and wherein the optically inactive counter electrode is a material according to claims 50 to 52, wherein the material is applied as thin layer onto a transparent conducting carrier of type glass or a polymer coated with a doped tin oxide of formula SnO₂:Sb or SnO₂:F or a doped indium oxide of formula In₂O₃:Sn.
